# EUROPÄISCHE PATENTSCHRIFT

(11) **EP 3 830 437 B1**
(45) Veröffentlichungstag und Bekanntmachung des Hinweises auf die Patenterteilung: **11.10.2023**
(21) Anmeldenummer: 19752143.8
(22) Anmeldetag: 01.08.2019
(51) Int. Cl.: F16C 29/12, F16C 29/02

(54) **TELESKOPSYSTEM**
TELESCOPIC SYSTEM
SYSTÈME TÉLESCOPIQUE

(30) Priorität: 02.08.2018 DE 202018104466 U
(43) Veröffentlichungstag der Anmeldung: 09.06.2021
(73) Patentinhaber: Igus GmbH, 51147 Köln (DE)
(72) Erfinder: MOSHAMMER, Horst, 53545 Linz am Rhein (DE)
(74) Vertreter: Lippert Stachow Patentanwälte Rechtsanwälte
(86) Internationale Anmeldenummer: PCT/EP2019/070800
(87) Internationale Veröffentlichungsnummer: WO 2020/025759

(56) Entgegenhaltungen:
- IT-A1- MI20 110 601
- US-A- 5 460 574
- US-A1- 2008 226 208

## Beschreibung

Die Erfindung betrifft ein Teleskopsystem, aufweisend zumindest zwei aneinander in Längsrichtung linear geführte, über einen Weg relativ zueinander bewegbare Profilschienen, die jeweils ein Längsprofil mit Längsnuten und/oder Längsrippen aufweisen, wobei an jeder Profilschiene zumindest ein Gleitelement vorgesehen ist, über das die zumindest zwei Profilschienen gleitverschieblich aneinander anliegen und das zumindest bezüglich der Längsrichtung axial verschiebungsfest an dem Längsprofil der ihm zugeordneten Profilschiene festgelegt angeordnet ist.

Ein derartiges Teleskopsystem wird in DE 10 2016 103 566 A1 offenbart. Das Teleskopsystem weist zwei ineinander geführte Hohlprofile auf, zwischen denen mittels einer Spritzgusslanze in situ an bestimmten Stellen jeweils ein Gleitelement unmittelbar in einen Zwischenraum zwischen den Hohlprofilen einspritzt wird, wobei das Gleitelement zum besseren Halt mit einem Fuß in eine Innennut des radial äußeren Hohlprofils bzw. eine Außennut des radial inneren Hohlprofils hineinragt. Die ist verfahrenstechnisch aufwendig und montageseitig kompliziert. Ferner kann sich das Gleitelement im Gebrauch lockern, in der Nut längsverschieben oder sogar aus derselben lösen.

Ein weiteres Teleskopsystem mit zwei ineinander geführten und sich über hohlzylindrische Gleitelemente aneinander abstützenden Hohlprofilen ist aus DE 10 2004 010 503 A1 bekannt. Die Gleitelemente werden jeweils durch in Querbohrungen eingreifende Querbolzen gegen ein axiales Verschieben gesichert. Somit sind mit den Querbohrungen zur Festlegung des Gleitelements konstruktive Veränderungen der Profilschienen erforderlich.

Dem Katalog "dry-tech Lagertechnik" der Anmelderin, aus 2015, Seite 840, ist ein Teleskopsystem entnehmbar, bei dem das Gleitelement schienenartig ausgebildet sowie zwischen den beiden und an den beiden Profilschienen gleitverschieblich gelagert ist. Da das Gleitelement teleskopierbar ist, wird es bei Vollauszug entsprechend stark biegebelastet. Daher ist ein derartiges Teleskopsystem für größere Traglasten ungeeignet.

Aus der IT MI20110601 A1 ist ein Teleskopsystem für Möbel, zum Beispiel ausziehbare Tische, bekannt, das mindestens zwei aneinander in Längsrichtung linear geführte, über einen Weg relativ zueinander bewegbare Strangpressprofile aufweist, die jeweils ein Längsprofil mit Längsnuten und Längsrippen einschließen. An einem der beiden Strangpressprofile ist ein mehrere Gleitelemente aufweisender Wagen festgelegt, wobei über die Gleitelemente die beiden Profile gleitverschieblich aneinander anliegen und die Gleitelemente bezüglich der Längsrichtung axial verschiebungsfest an dem betreffenden Profil festgelegt angeordnet sind. Zum verschiebungsfesten Festlegen des Wagens mit den Gleitelementen am betreffenden Profil sind Kerben in das Strangpressprofil eingearbeitet, in die am Wagen angeordnete Laschen eingreifen.

Die US 2008/0226208 A1 offenbart ein Teleskopsystem mit drei in Längsrichtung linear geführten, über einen Weg relativ zueinander bewegbaren Schienen, eine äußere Schiene, eine innere Schiene und eine zwischen diesen angeordnete mittlere Schiene, die Längsnuten bzw. Längsrippen aufweisen. An der mittleren Schiene ist ein durch eine Feder belastetes Gleitelement und an der Innenwand der äußeren Profilschiene ein mit dem Gleitelement zusammenwirkender Anschlag vorgesehen, um ein versehentliches Auseinanderschieben der beiden Schienen zu vermeiden. Beim Einschieben der mittleren Profilschiene in die äußere Profilschiene gleitet das Gleitelement gegen die Federwirkung lediglich über die geneigte Fläche des Anschlags, bis es hinter den Anschlag einrastet. Bis auf das Gleiten des Gleitelements über den Anschlag liegen die Schienen nicht über das Gleitelement gleitverschieblich aneinander an. Das federbelastete Gleitelement wird über eine Schraube an der mittleren Schiene gehalten.

Weiterhin geht aus der US 5 460 574 B ein Teleskopsystem mit einer ersten Welle und einer in der ersten Welle angeordneten zweiten Welle hervor, die aneinander in Längsrichtung linear geführt und über einen Weg relativ zueinander bewegbar sind. Die beiden Wellen weisen ineinandergreifende Längsnuten und Längsrippen auf. Zwischen den Wellen ist eine Lagerbuchse angeordnet, die die axiale Relativbewegung zwischen den Wellen erlaubt und die Übertragung eines Drehmoments von einer auf die andere Welle ermöglicht. Die Lagerbuchse ist im Querschnitt, wie die beiden Wellen, wellenförmig ausgebildet und weist Gleitelemente auf, die durch Blattfedern paarweise miteinander verbunden sind und mit einer radialen Vorspannung an der außen angeordneten Welle anliegen. Weiterhin weist die Lagerbuchse an einer Stirnseite, mit der sie in die außenliegende Welle eingeführt wird, Federzungen auf, die bei Erreichen eines aufgeweiteten zylinderförmigen Bereichs der außenliegenden Welle in diesen einschnappen und zusammen mit an der anderen Stirnseite angeordneten Anschlägen die Lagerbuchse mit den Gleitelementen in der außenliegenden Welle verschiebungssicher festlegen. Die innere Welle besitzt keine daran verschiebungssicher festgelegten Gleitelemente.

Eine Aufgabe der Erfindung ist, ein gattungsgemäßes Teleskopsystem bereitzustellen, das einfach aufgebaut und leichter montierbar ist. Ferner soll das Gleitelement verschiebungssicher an der jeweils zugeordneten Profilschiene gehalten werden. Zudem soll zur Festlegung des Gleitelements keine konstruktive Veränderung der Profilschienen erforderlich sein. Überdies soll das Teleskopsystem für die Aufnahme größerer Traglastmomente geeignet sein.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird dadurch gelöst, dass bei einem Teleskopsystem der eingangs genannten Art die Profilschienen aus einem Profilstrang auf eine bestimmte Länge abgelängt sind und an jeder Profilschiene zumindest ein Gleitelement festgelegt ist, das zumindest bezüglich einer durch die Längsrichtung und eine erste Querrichtung senkrecht zur Längsrichtung definierten Gleitebene an der Profilschiene verschiebungsfest mit einem Klemmelement verbunden ist, wobei das Klemmelement in einem Klemmsitz an dem Längsprofil der Profilschiene und zwar in oder an einer Längsnut und/oder an einer Längsrippe angeordnet ist, und wobei zum Klemmsitz des Klemmelements an dem Längsprofil und Festlegen des Gleitelements an der jeweiligen Profilschiene keine weiteren Vorkehrungen und konstruktiven Veränderungen der aus einem Profilstrang abgelängten Profilschiene erfolgt sind.

Der Klemmsitz des Klemmelements an dem Längsprofil erfordert keine weiteren Vorkehrungen oder konstruktive Veränderungen der Profilschienen. Dies vereinfacht Aufbau und Montage des Teleskopsystems. Dank des Klemmsitzes über ein Klemmelement an dem Längsprofil kann das Gleitelement verschiebungssicher an der jeweils zugeordneten Profilschiene gehalten werden. Da jeder Profilschiene wenigstens ein Klemmelement zugeordnet ist, sind die zumindest zwei Profilschienen in Einbaulage an den wenigsten zwei Gleitelementen aneinander gleitverschieblich geführt angeordnet.

In der vorliegenden Erfindung bilden allein die Profilschienen die Teleskopglieder. Eine durch das Teleskopsystem erzielte Längenveränderung erfolgt allein über die Profilschienen. Daher kann das Teleskopsystem auch für größere Lastmomente ausgelegt werden. Zum Einsetzen oder Festlegen der Gleitelemente in das Teleskopsystem und/oder axial verschiebungsfesten Festlegen des Gleitelementes an der jeweiligen Profilschiene ist keine weitere Bearbeitung derselben notwendig. Es müssen beispielsweise keine Bohrungen zur Aufnahme des Gleitelements eingebracht werden, in die oder an denen die Gleitelemente gesteckt bzw. verschraubt werden. Daher kann die Profilschiene aus einem Profilstrang auf eine bestimmte Länge abgelängt und ohne weitere Vorkehrungen in das Teleskopsystem verbaut werden.

Die Profilschienen können in Einbaulage allein über die zumindest zwei Gleitelemente gleitverschieblich aneinander anliegend angeordnet sein. Insbesondere kann das eine der zumindest zwei Gleitelemente axial verschiebungsfest mit der einen der zumindest zwei Profilschienen und das andere der zumindest zwei Gleitelemente axial verschiebungsfest mit der anderen der zumindest zwei Profilschienen verbunden sein. Die beiden Profilschienen können über eine Nut-Feder-Verbindung ineinander greifend angeordnet sein. In der Nut-Feder-Verbindung können die Längsnuten die Nut und die Längsvorsprünge die Feder bilden. Desgleichen können die Profilschienen über die zugeordneten Gleitelemente in Form der Nut-Feder-Verbindung ineinander greifend angeordnet sein. Es können die Längsnuten des Längsprofils die Nut und die Längsrippen des Längsprofils die Feder bilden. Diese Zuordnung von Längsnuten und Längsrippen in der Nut-Feder-Verbindung impliziert, dass die beiden Profilschienen zwar unterschiedliche, aber aneinander angepasste Längsprofile aufweisen können.

Vorzugsweise sind die Profilschienen aus Metall, insbesondere aus einer Aluminiumlegierung, insbesondere einer höherfesten Aluminiumlegierung, gefertigt. Diese Werkstoffwahl erlaubt die Aufnahme und Weiterleitung größerer Lasten. Der Profilstrang ist vorzugsweise stranggepresst, kann aber auch spritzgegossen sein. Der Profilstrang kann hierbei das vollständige Längsprofil aufweisen, das für die Ausbildung des Teleskopsystems mit zumindest zwei jeweils aus einem Profilstrang abgelängten Profilschienen vorgesehen ist.

Kraftmechanisch günstig, kann das an der Profilschiene verschiebungsfest angeordnete Gleitelement bezüglich der Längsrichtung über seine gesamte axiale Länge an dieser Profilschiene abgestützt angeordnet sein. Das Gleitelement kann in Einbaulage bezüglich dieser Profilschiene ohne jedweden Freiheitsgrad fest in dem Teleskopsystem gehalten angeordnet sein. Der Klemmsitz ermöglicht eine spielfreie Anordnung des Gleitelements an der Profilschiene.

In Einbaulage können Längsnut und/oder Längsrippe zu dem jeweiligen Gleitverbindungspartner hin seitlich geöffnet ausgebildet bzw. sich hin erstreckend angeordnet sein. Die Längsnut kann seitlich senkrecht oder etwa senkrecht zur Gleitebene geöffnet ausgebildet sein. Entsprechend kann sich die Längsrippe mit ihrem freien Endbereich senkrecht oder etwa senkrecht zur Gleitebene erstrecken. Die Richtung senkrecht oder etwa senkrecht zur Gleitebene definiert eine zweite Querrichtung. Diese kann senkrecht oder etwa senkrecht zur ersten Querrichtung und zur Längsrichtung sein. Die Längsnut kann von zwei Längsrippen oder von einer Längsrippe und einer Innenwandung seitlich begrenzt sein. Die Längsrippe kann auch als Längsvorsprung des Längsprofils bezeichnet werden. Gewicht sparend kann die Längsrippe als Hohlrippe ausgebildet sein.

Das Klemmelement kann in die oder an der Längsnut senkrecht zur Gleitebene seitlich oder bezüglich der Längsrichtung axial in die Längsnut eingreifen. Das Klemmelement kann in Längsrichtung oder senkrecht hierzu seitlich in die Längsnut eingebracht werden. Ähnlich kann das Klemmelement über den Längsvorsprung senkrecht zur Gleitebene übergestülpt werden oder bezüglich der Längsrichtung axial aufgeschoben werden.

Wie üblich können die aneinander gleitverschieblich gelagerten Profilschienen über das Gleitelement unter Ausbildung eines Gleitspaltes beabstandet in dem Teleskopsystem angeordnet sein. Der Gleitspalt kann wegen vorteilhaft geringer Bauhöhen gleich oder etwa gleich einer durchschnittlichen Wandstärke des Gleitelements ausgebildet sein. Die Höhe der Beabstandung kann durch die Geometrie, insbesondere durch die Wandstärke des Gleitelementes definiert werden.

In einer Weiterbildung des Teleskopsystems können das Gleitelement und das Klemmelement zumindest bezüglich der Längsrichtung oder der Gleitebene formschlüssig und/oder kraftschlüssig aneinander festgelegt angeordnet sein. Es können Gleitelement und Klemmelement im Formschluss lose bleibend anliegen. Das Gleitelement kann unter Ausbildung eines Kraftschlusses zwischen zwei Klemmelementen eingeklemmt angeordnet sein, die jeweils im Klemmsitz an dem Längsprofil angeordnet sind. Vorteilhaft wegen einer festeren Verbindung, kann vorgesehen sein, dass Gleitelement und Klemmelement, vorzugsweise unter Ausbildung einer Federkraft, aneinander verrasten. Zur Verrastung können an Gleitelement und Klemmelemente aneinander angepasste übliche Verrastungsmittel, wie kalottenartige Erhebung, die in eine entsprechend muldenartige Vertiefung eingreift, oder auch eine Hinterschneidung, in die ein entsprechend angepasster Vorsprung eingreift, vorgesehen sein. Insbesondere können Gleitelement und Klemmelement über einen Formschluss miteinander verbunden sein. Konstruktions- und montageseitig günstig, kann das Gleitelement bezüglich der Längsrichtung das Klemmelement axial übergreifend und axial beidendseitig des Klemmelements an demselben anliegend angeordnet sein. Das Gleitelement kann senkrecht zur ersten Querrichtung bzw. senkrecht zu einer zur ersten Querrichtung senkrechten zweiten Querrichtung verschiebungsfest und verdrehfest sowie bezüglich der Längsrichtung verdrehfest gehalten angeordnet sein. Beide Querrichtungen können senkrecht oder zumindest in etwa senkrecht zur Längsrichtung ausgerichtet sein. In Einbaulage in das Teleskopsystem können Kräfte und Kraftmomente in bzw. bezüglich aller Richtungen von dem Gleitelement aufgenommen werden.

Das Klemmelement kann eine langgestreckte Form aufweisen. Es kann eine zylindrische, teilzylindrische, halbzylindrische, prismatische, ellipsoide, linsenartige oder kugelartige Form aufweisen. Das Klemmelement kann als Bolzen, Stift oder Kugel ausgebildet sein. Das Klemmelement kann zur Reibungserhöhung eine Oberflächenstruktur, wie erhöhte Rauigkeit oder umfängliche Rippen aufweisen. Das Klemmelement kann radial außen umfängliche Oberflächenstrukturen ähnlich denen eines Rillen-, Schraub- oder Kerbnagels aufweisen. Insbesondere können Bolzen oder Stift ein sich vorzugsweise über die gesamte axiale Länge von Bolzen bzw. Stift erstreckendes Außengewinde aufweisen. Bolzen oder Stift können zur leichteren Einführung und Festklemmung in Längsnut zumindest an einem seiner beiden Endbereiche konisch sich verjüngend ausgebildet sein. Ähnlich kann die Kugel in Einbaulage in Längsrichtung verjüngen, indem sie beispielsweise ellipsoid ausgebildet ist.

Das Gleitelement kann vorteilhaft einfach über eine Steckverbindung oder mehrere Steckverbindungen insbesondere nach dem Nut-Feder-Prinzip mit dem Längsprofil der jeweils zugeordneten Profilschiene gekoppelt, insbesondere verbunden werden. In einer Weiterbildung des Teleskopsystems kann das Gleitelement als Profilteil mit sich in Einbaulage in Längsrichtung erstreckendem Längsprofil ausgebildet sein. Das Längsprofil kann ähnlich den Profilschienen Längsnuten und/oder insbesondere, zum Eingriff in eine zugeordnete Längsnut einer zugeordneten Profilschiene, rippenartige Längsvorsprünge aufweisen.

Zur Klemmung des Gleitelements an einer zugeordneten Profilschiene kann das Klemmelement in der zugeordneten Längsnut im Klemmsitz angeordnet sein. Das Gleitelement kann ausgebildet sein, zu seiner zur zumindest bezüglich der Längsrichtung axial verschiebungsfesten Verbindung mit der ihm zugeordneten einen Profilschiene in die das Klemmelement aufweisende Längsnut dieser einen Profilschiene und/oder in die das Klemmelement aufweisende Längsnut der anderen Profilschiene einzugreifen. Das Gleitelement kann zumindest einen rippenartigen Längsvorsprung mit einer Aufnahmeausnehmung aufweisen. Der rippenartige Längsvorsprung kann in Einbaulage in die ihm zugeordnete Längsnut mit dem Klemmelement unter Aufnahme des Klemmelementes in die Aufnahmeausnehmung eingreifen. Umgekehrt kann auch die Profilschiene eine Längsrippe aufweisen, die in eine an dem Gleitelement vorgesehene Längsnut eingreift, wobei das Klemmelement an der Längsrippe beispielsweise unter seitlicher Umklammerung derselben angeordnet ist. Die Aufnahme des Klemmelementes in die Aufnahmeausnehmung kann unter federelastischer Aufweitung derselben erfolgen. Das Gleitelement kann somit zusätzlich zum Formschluss kraftschlüssig an dem Klemmelement gehalten werden.

Der Eingriff des Klemmelementes in die Aufnahmeausnehmung kann zumindest bezüglich der Längsrichtung formschlüssig erfolgen. Die Aufnahmeausnehmung kann als Unterbrechung, Lücke oder Einschnitt in den rippenartigen Längsvorsprung eingebracht sein. Die Aufnahmeausnehmung kann bezüglich der Längsrichtung der axialen Länge des Klemmelements angepasst sein. In Einbaulage kann sich der rippenartige Längsvorsprung des Gleitelements mit seinem freien Endbereich in zweite Querrichtung erstrecken. In Einbaulage können die Längsrichtungen von Profilschiene, Gleitelement und Klemmelement gleich sein.

Das Gleitelement kann eine flache Grundform mit einer Basis parallel zur Gleitebene aufweisen, wobei sich von einer Seite der Basis senkrecht zur Gleitebene zumindest der eine rippenartige Längsvorsprung und/oder ein rippenartiger weiterer Vorsprung in Verlängerung der Basis in erste Querrichtung weg erstrecken. Die Basis kann in Einbaulage sich parallel zur Gleitebene erstreckend angeordnet sein. In der flachen Grundform kann die sich in Einbaulage in zweite Querrichtung erstreckende Höhe des Gleitelementes wesentlich kleiner, d.h. beispielsweise dreimal bis zehnmal kleiner, als die Erstreckung des Gleitelements in erste Querrichtung sein. Das Gleitelement kann formschlüssig in einer in zweite Querrichtung seitlich geöffneten zusätzlichen Längsnut der einen Profilschiene angeordnet sein. Das Gleitelement kann mit seiner Basis flächig auf dem Nutengrund der zusätzlichen Längsnut aufliegen. Ferner kann es sich bezüglich der ersten Querrichtung beidseitig in der zusätzlichen Längsnut abstützen. Die beiden Längsvorsprünge können sich von dem Nutengrund in Richtung der seitlichen Öffnung der zusätzlichen Längsnut weg erstrecken.

Die Wandstärke des Gleitelementes kann in allen seinen Bereichen gleich oder zumindest etwa gleich sein. Unter anderem kann über die Wandstärke der Basis ein Spaltmaß eines Spaltes eingestellt werden, über den die Profilschienen senkrecht zur Gleitebene voneinander beabstandet gehalten sind. Der zumindest eine rippenartige Längsvorsprung und der rippenartige weitere Vorsprung des Gleitelementes können bezüglich der ersten Querrichtung beabstandet zueinander angeordnet sein.

In einer weiteren Ausführungsform des Teleskopsystems kann das Gleitelement zwei rippenartige Längsvorsprünge aufweisen. Einer der beiden Längsvorsprünge kann mit dem Längsprofil der Profilschiene gekoppelt sein, an der das Gleitelement in Einbaulage festgelegt ist. Der andere der beiden Längsvorsprünge kann mit dem Längsprofil der Profilschiene gekoppelt sein, die in Einbaulage gleitverschieblich an dem Gleitelement anliegt.

Die beiden Längsvorsprünge können sich in einer gemeinsamen Richtung senkrecht oder etwa senkrecht zur Gleitebene von der einen gleichen Seite der Basis weg erstreckend angeordnet sein. Die beiden Längsvorsprünge können vollständig zu dieser Seite angeordnet sein. Es kann sich einer der beiden Längsvorsprünge in diese gemeinsame Richtung erstrecken. Es kann sich dieser als erster Längsvorsprung bezeichnete Längsvorsprung mit seinem freien Endbereich in diese gemeinsame Richtung erstrecken. Ferner kann ein als zweiter Längsvorsprung bezeichneter Längsvorsprung hakenartig gekrümmt ausgebildet sein. Insbesondere kann der zweite Längsvorsprung an seinem freien Endbereich unter Ausbildung einer Aufnahmenut für eine Längsrippe einer zugeordneten Profilschiene um eine Krümmungsachse parallel zur Längsrichtung hakenförmig umgebogen ausgebildet sein. Die Aufnahmenut kann in Gegenrichtung zur gemeinsamen Richtung seitlich geöffnet ausgebildet sein. Der zweite Längsvorsprung kann sich mit dem freien Endbereich der hakenartigen Form in Gegenrichtung zu dieser gemeinsamen Richtung zu der Seite hin erstrecken. Bevorzugt bleibt das freie Ende der hakenartigen Form beabstandet zu der Seite der Basis angeordnet, von der sich der zweite Längsvorsprung weg erstreckt. Der zweite Längsvorsprung kann bis kleiner 90%, vorzugsweise kleiner/gleich 60% seiner Erstreckung in Längsrichtung um eine Krümmungsachse parallel zur Längsrichtung hakenförmig gekrümmt ausgebildet sein. Günstig wegen einer universellen Positionierung des Gleitelementes in dem Teleskopsystem können die zwei Längsvorsprünge jeweils eine Aufnahme für das Klemmelement aufweisen. Vorzugsweise ist jedem Längsvorsprung des Gleitelementes eine Längsnut des Längsprofils der zugeordneten Profilschiene zugeordnet.

Alle in dem Teleskopsystem eingesetzten Gleitelemente können baugleich ausgebildet sein. Zudem können sie einstückig sein. Die bezüglich der Längsachse axiale Erstreckung des Gleitelements kann kleiner/gleich 40%, kleiner/gleich 20% oder kleiner/gleich 5% der entsprechenden axialen Länge der zugeordneten Profilschiene sein.

Der rippenartige weitere Vorsprung des Gleitelements kann einen freien Endbereich aufweisen, der eine in erster Querrichtung seitlich geöffnete weitere Aufnahmenut für eine Aufnahmerippe einer zugeordneten Profilschiene begrenzt. Die Aufnahmenut kann durch die hakenartige Krümmung des freien Endbereichs definiert werden. Der freie Endbereich des rippenartigen weiteren Vorsprungs des Gleitelements kann parallel zur Längsrichtung hakenartig umgebogen ausgebildet sein. Der rippenartige weitere Längsvorsprung kann über bis kleiner 90%, vorzugsweise bis kleiner 60% seiner Erstreckung senkrecht zur Längsrichtung hakenförmig gekrümmt ausgebildet sein. Eine entsprechende Krümmungsachse kann parallel zur Längsrichtung ausgerichtet sein. Die Aufnahmerippe kann auch eine eine Längsnut begrenzende Längsrippe sein.

Der rippenartige weitere Vorsprung kann in erster oder etwa in erster Querrichtung in eine weitere Längsnut einer zugeordneten Profilschiene eingreifen. Die weitere Längsnut kann vorteilhaft bezüglich der ersten Querrichtung außen angeordnet sein. Die weitere Längsnut kann bezüglich der ersten Querrichtung zur Mitte hin seitlich geöffnet ausgebildet sein. Vorteilhaft können die Profile von der weiteren Längsnut und dem weiteren Längsvorsprung einander angepasst ausgebildet sein.

Der weitere rippenartige Längsvorsprung kann federwirksam, vornehmlich senkrecht zur Gleitebene federwirksam, ausgelegt sein. Insbesondere kann der rippenartige weitere Längsvorsprung blattfederartig ausgebildet sein. Um das Gleitelement mit seiner Aufnahme bezüglich der Gleitebene über das ihm zugeordnete Klemmelement bringen zu können, kann das Gleitelement in einem ersten Schritt mit seinem federnden weiteren Längsvorsprung in die weitere Längsnut der zugeordneten Profilschiene unter Abwinkelung zur Gleitebene stirnseitig eingeführt werden. Dann kann das Gleitelement soweit axial in der weiteren Längsnut verschoben werden, bis die Aufnahme bezüglich der zweiten Querrichtung fluchtend zu dem Klemmelement angeordnet ist. In einem weiteren Schritt kann das Gleitelement über seinen in die weitere Längsnut ragenden weiteren Längsvorsprung unter gleichzeitiger Aufnahme des Klemmelements in seiner Aufnahme zu der Gleitebene hin verschwenkt werden. Hierbei kann zusätzlich eine Verrastung des Gleitelements an dem Klemmelement erfolgen.

Zur Sicherung der Profilschienen gegen eine Relativbewegung senkrecht zur Gleitebene kann vorgesehen sein, dass die andere Profilschiene als Gleitpartner zu der einen Profilschiene mit einem vorgesehenen Aufnahmevorsprung in deren Aufnahmenut eingreift. Es können die Aufnahmenut der einen Profilschiene, der Aufnahmevorsprung der anderen Profilschiene und der weitere Vorsprung des Gleitelements so einander abgestimmt dimensioniert sein, dass sie insbesondere über in zweite Querrichtung weisende Gleitführungsflächen vorzugsweise spielfrei oder etwa spielfrei aneinander anliegen. Mit dem Eingreifen des Aufnahmevorsprungs der anderen Profilschiene über die Längsnut des Gleitelements in die Aufnahmenut der einen Profilschiene kann die Längsnut mit zumindest Teilen ihrer Wandung innenseitig gegen die Wandung der Aufnahmenut gedrückt werden. Die beiden Profilschienen können über die Gleitelemente in weiter unten näher erläuterten Gleitführungsflächen gleitverschieblich, insbesondere spielfrei, oder nahezu spielfrei, gleitverschieblich, aneinander anliegen. An den Gleitführungsflächen können die Bauteile Profilschiene und Gleitelement unter gleichzeitiger Führung aneinander abgleiten. Es kann jeder Gleitführungsfläche des Gleitelementes eine entsprechende Gleitführungsfläche einer der zumindest zwei Profilschienen zugeordnet sein.

Ferner kann die Aufnahmenut eine vorzugsweise in erster Querrichtung und insbesondere bezüglich der Längsrichtung radial nach innen wirksame Hinterschneidung aufweisen. Es kann der der Aufnahmenut angepasste weitere Vorsprung gegen eine mögliche Relativbewegung in erster Querrichtung formschlüssig an der Hinterschneidung in der Aufnahmenut gehalten angeordnet sein. Durch diese Maßnahmen können die beiden Gleitpartner sowie das den Aufnahmevorsprung umklammernde Gleitelement gegenüber einer Relativbewegung in erster Querrichtung zumindest lagestabilisiert werden. Insbesondere können sie bezüglich der ersten Querrichtung spielfrei oder nahezu spielfrei aneinander anliegen.

Der zumindest eine rippenartige Längsvorsprung kann bzw. die beiden rippenartigen Längsvorsprünge können bezüglich der ersten Querrichtung beabstandet dem rippenartigen weiteren Vorsprung des Gleitelementes angeordnet sein. Das Gleitelement kann somit bezüglich der ersten Querrichtung und/oder bezüglich der Längsrichtung zwei axial voneinander getrennte Bereiche aufweisen. In einem axial inneren Bereich kann der eine Längsvorsprung bzw. können die beiden Längsvorsprünge angeordnet sein. Diese können zur ersten Querrichtung senkrechte erste Gleitführungsflächen aufweisen. In dem anderen der beiden axialen Bereiche axial randseitig angeordnet, kann der weitere Längsvorsprung die oben erwähnten zur Gleitebene parallelen zweiten Gleitführungsflächen aufweisen. Unter anderem ermöglichen diese konstruktiven Maßnahmen, dass alle Gleitelemente baugleich ausgebildet sein können.

Das Gleitelement kann aus Kunststoff, insbesondere aus reibungsminderndem, ferner verschleißfestem Kunststoff gefertigt sein. Insbesondere kann ein Tribopolymer als Werkstoff für das Gleitelement eingesetzt werden. Dank eincompoundierter Festschmierstoffe kann ein schmiermittelfreier Trockenlauf ermöglicht werden, der auch für die Verwendung beispielsweise in Lebensmittelbereichen geeignet ist. Ferner kann eine geräuscharme Relativbewegung der Profilschienen erzielt werden. Das Gleitelement kann durch Spritzguss hergestellt sein. Es kann ferner kostengünstig aus einem beispielsweise durch Strangpressen oder Spritzgießen vorgefertigten Profilstrang abgelängt werden. Das Gleitelement ermöglicht somit für die beiden relativ zueinander verschiebbaren Profilschienen eine Gleitlagerung. Diese ist dank der Werkstoffpaarung korrosionsbeständig sowie wartungs- und schmiermittelfrei.

Insbesondere können zumindest einige der Gleitführungsflächen zumindest paarweise oder zumindest zu dritt zusammenwirkend sein. Die Gleitführungsflächen eines jeden Gleitführungsflächenpaares oder -Tripels können parallel zueinander sowie einander zugewandt oder abgewandt angeordnet sein. Insbesondere können einige als erste Gleitführungsflächen ausgebildete Gleitführungsflächen senkrecht zur ersten Querrichtung oder einige als zweite Gleitführungsflächen ausgebildete Gleitführungsflächen senkrecht zur zweiten Querrichtung vorgesehen sein. Konstruktions- und montageseitig einfach kann zumindest ein Längsvorsprung des Gleitelements erste Gleitführungsflächen, insbesondere alle am Gleitelement vorgesehenen ersten Gleitführungsflächen aufweisen. Ferner können der weitere Längsvorsprung und die Basis des Gleitelements zweite, insbesondere alle am Gleitelement vorgesehene zweite Gleitführungsflächen aufweisen. Es können die ersten Gleitführungsflächen bezüglich der ersten Querrichtung beabstandet zu den zweiten Gleitführungsflächen angeordnet sein.

Zum Zusammenbau wird vorgeschlagen, die Profilschienen stirnseitig in Längsrichtung ineinander zu schieben. Wegen der bereits vormontierten Gleitelement und einer vorteilhaft engeren, wie spielfreien oder nahezu spielfreien Führung der Profilschienen ineinander, müssen die Profilschienen praktische ineinander "eingefädelt" werden.

Für den Zusammenbau zweier Profilschienen, die jeweils mit der gewünschten Anzahl an Gleitelementen versehen sind, zu einer spielfreien oder nahezu spielfreien Anordnung der Profilschienen, kann eine Einführhilfe vorgesehen sein. Diese kann eine oder mehrere Maßnahmen umfassen, die jeweils die Phase des Zusammenbaus erleichtern, in der die Profilschienen mit den Gleitelementen versehen stirnseitig in Längsrichtung ineinander geschoben werden. Eine bereits oben beschriebene Maßnahme hierzu kann sein, dass die ersten Gleitführungsflächen bezüglich der ersten Querrichtung beabstandet zu den zweiten Gleitführungsflächen angeordnet sind. Eine weitere Maßnahme kann sein, dass die schmale Stirnseite der Wandung mit den Gleitführungsflächen senkrecht zur ersten Querrichtung bezüglich der Längsrichtung axial beabstandet oder versetzt zu der schmalen Stirnseite der Wandung mit den Gleitführungsflächen senkrecht zur zweiten Querrichtung angeordnet sind. Dieser Versatz kann in und/oder gegen Längsrichtung vorgesehen sein. Die in Längsrichtung weisenden schmalen Stirnseiten der Gleitführungsflächen können die Stirnseite der Profilschiene, die über das Gleitelement zu verschieben ist, entsprechend dem axialen Versatz der Stirnseiten dieselben versetzt erreichen. Das Ineinanderführen zweier Profilschienen als Gleitpartner kann unter sukzessiver Orientierung an den verschiedenen Gleitführungsflächen, wie zum Beispiel an den Gleitführungsflächen senkrecht zur zweiten Querrichtung und dann an den Gleitführungsflächen senkrecht zur ersten Querrichtung, erfolgen. Als weitere Maßnahme kann vorgesehen sein, dass die in Längsrichtung weisenden Stirnseiten der Gleitführungsflächen jeweils vorzugsweise beidseitig angefast sind. Sie können Eingangsschrägen aufweisen, die jeweils als schiefe Ebene wirken. Diese Anfasung kann auf beiden in Längsrichtung weisenden Stirnseiten der Gleitelemente vorgesehen sein. Die oben beschriebenen Maßnahmen ermöglichen den universellen Einsatz der Gleitelemente in dem Teleskopsystem. Die Gleitelemente des Teleskopsystems können auch dadurch baugleich sein.

Die zumindest zwei zwischen den zumindest zwei Profilschienen angeordneten Gleitelemente können bezüglich der Längsrichtung, kollinear und axial voneinander beabstandet angeordnet sein. Die beiden Gleitelemente können auf einer in Längsrichtung verlaufende Mittelachse positioniert sein. Es können die beiden Gleitelemente bezüglich der ersten Querrichtung mittig in dem Teleskopsystem angeordnet sein.

Es können auch drei Gleitelemente zwischen den beiden Profilschienen vorgesehen sein. Diese können kraftmechanisch günstig bezüglich der Gleitebene an den Eckpunkten eines gleichschenkligen Dreiecksangeordnet sein. In einer vorteilhaften Weiterbildung des Teleskopsystems können vier Gleitelemente vorgesehen sein, über die die beiden Profilschiene gleitverschieblich aneinander anliegen. Die Gleitelemente können bezüglich einer mittigen ersten Spiegelsymmetrieebene senkrecht zur ersten Querrichtung spiegelsymmetrisch zueinander angeordnet und/oder ausgerichtet sein. Entsprechend können zumindest die Teile der Längsprofile beider Profilschienen, mit denen die Gleitelemente gekoppelt sind, bezüglich dieser ersten Spiegelsymmetrieebene spiegelsymmetrisch ausgebildet sein. Die Gleitelemente können zu zwei Gleitelementpaare mit jeweils zwei Gleitelementen zusammengefasst sein. Die beiden Gleitelementpaare können bezüglich der Längsrichtung beabstandet voneinander angeordnet sein. Insbesondere können die Gleitelemente eines vorzugsweise jeden Gleitelementpaars bezüglich der Längsrichtung auf gleicher Höhe angeordnet sein. Günstigerweise kann das eine Gleitelementpaar der zumindest zwei Gleitelementpaare axial verschiebungsfest mit der einen der zumindest zwei Profilschienen und das andere Gleitelementpaar der zumindest zwei Gleitelementpaare axial verschiebungsfest mit der anderen der zumindest zwei Profilschienen verbunden sein. Insbesondere bei größeren Breiten in erster Querrichtung der Profilschiene können zur verbesserten Abstützung derselben an den Gleitelementen Gleitelementtripel vorgesehen sein.

Die Längsnuten können zur Aufnahme des Klemmelements der einen Profilschiene bezüglich der ersten Querrichtung axial beabstandet zu den Längsnuten zur Aufnahme des Klemmelements der anderen Profilschiene angeordnet sein. In Einbaulage können die Längsnuten der einen Profilschiene bezüglich der ersten Querrichtung axial innen zu den Längsnuten der anderen Profilschiene angeordnet sein.

Insbesondere können die Gleitelemente bezüglich der Längsrichtung jeweils in einem stirnseitigen Endbereich der jeweils zugeordneten Profilschiene angeordnet sein. Sie können auch stirnseitig bündig mit der jeweils zugeordneten Stirnseite der Profilschiene abschließen. Die Basen der zwischen den beiden Profilschienen angeordneten Gleitelemente können in einer gemeinsamen Ebene parallel zur Gleitebene angeordnet sein.

Das erfindungsgemäße Teleskopsystem kann somit sehr einfach hergestellt und montiert werden. Zur Erstellung eines Teleskopsystems mit beispielsweise zwei Profilschienen, können dieselben bereitgestellt werden, indem sie jeweils aus einem Profilstrang abgelängt werden. Die Längsprofile der beiden Profilstränge sind hierbei, wie oben beschrieben, aneinander so angepasst, dass sie in Einbaulage in einer Nut-Feder-Verbindung ineinander greifen. Des Weiteren können wenigstens zwei Gleitelemente bereitgestellt werden, die aus einem einzigen Profilstrang abgelängt sein können. Die wenigsten zwei Gleitelemente können somit baugleich und einstückig sein. Ferner können pro Gleitelement zumindest ein Klemmelement bereitgestellt werden. Die Klemmelemente können aus einem Strang abgelängt sein. Die Klemmelemente können baugleich und einstückig sein.

In einem ersten Montageschritt kann eines der beiden Gleitelemente an einer Profilschiene und das andere Gleitelement an der anderen Profilschiene jeweils zumindest bezüglich der Längsrichtung axial verschiebungsfest festgelegt werden. Hierzu können in einem ersten Teilschritt eines der Klemmelemente in die ihm zugeordnete Längsnut einer der beiden Profilschienen und das andere Klemmelement in die ihm zugeordnete Längsnut der anderen der beiden Profilschiene jeweils in einem Klemmsitz hinein eingebracht werden. In einem weiteren Teilschritt können die beiden Gleitelemente über ihr jeweils zugeordnetes Klemmelement gebracht werden. Hierzu können sie, jeweils mit ihrem weiteren Längsvorsprung um eine Schwenkachse parallel zur Längsrichtung schwenkbeweglich in die weitere Längsnut eingeschoben werden, bis sie jeweils mit ihrer Aufnahme bezüglich der Längsrichtung axial über das zugeordnete Klemmelement gebracht sind. Dann kann das Gleitelement über das Klemmelement unter Verschwenkung abgesenkt werden und hierbei das Klemmelement in die Aufnahmeöffnung aufnehmen. Das Gleitelement kann somit zur Montage mit seinem weiteren Längsvorsprung in Längsrichtung gleitverschieblich und um eine Schwenkachse parallel zur Längsrichtung in der weiteren Längsnut angeordnet sein.

In einem weiteren Montageschritt können die beiden jeweils mit zumindest einem Gleitelement versehenen Profilschienen stirnseitig ineinander geschoben werden, so dass sie über die zumindest zwei Gleitelemente aneinander anliegen.

In einer Weiterbildung des Teleskopsystems kann zur Begrenzung des linearen Weges eine Anschlagvorrichtung vorgesehen sein. Diese kann zumindest zwei Endanschläge aufweisen. Diese Endanschläge können die zuvor beschriebenen Gleitelemente bilden. Als mechanisch stabiler werden zusätzliche Endanschläge angesehen. Diese können in einer weiteren Längsnut der jeweiligen Profilschiene angeordnet sein. Ferner kann ein mit den Endanschlägen zusammenwirkendes Anschlagelement vorgesehen sein. Das Anschlagelement kann in der weiteren Längsnut der anderen Profilschiene lagefixiert oder gleitverschieblich angeordnet sein. Das Anschlagelement kann mittels eines Klemmelementes in der ihm zugeordneten weiteren Längsnut axial verschiebungsfest gehalten werden. In beiden Fällen kann das Klemmelement im Klemmsitz in der zugeordneten weiteren Längsnut gehalten werden. Zudem kann der Weg über die Längserstreckung des Anschlagelementes eingestellt werden. Konstruktions- und montageseitig vorteilhaft, kann das Klemmelement exakt gleich dem oben und nachfolgend beschriebenen Klemmelement sein, das zur verschiebungsfesten Lagerung des Gleitelements eingesetzt wird. Damit sind die Endanschläge stark belastbar.

In der Anschlagnut kann mindestens ein zwischen Anschlagelement und einem der beiden Endschläge sowie mindestens ein zwischen Anschlagelement und dem anderen Endanschlag angeordnetes Pufferelement vorgesehen. Die Pufferelemente können frei verschieblich in der Anschlagnut geführt und/oder stirnseitig an dem Anschlagelement festgelegt angeordnet sein. Das Vorsehen der Pufferelemente kann die Standzeit der Endanschläge und/ oder des Anschlagelements erhöhen. Das Anschlagelement kann verrastend in die weitere Anschlagnut eingreifen. Diese kann zumindest eine in Längsrichtung verlaufende Führungsnut aufweisen, in die das Anschlagelement mit einem der Führungsnut angepassten Längsvorsprung eingreift.

Zur Endmontage können in einem ersten Teilschritt zunächst lediglich einen Endanschlag vorzugsweise an gewünschter Stelle positioniert sein und die beispielsweise beiden Profilschienen wie oben beschrieben stirnseitig in einer Montagerichtung ineinandergeschoben sein. In einem weiteren Teilschritt kann der zweite Endanschlag ebenfalls in Montagerichtung in einem Klemmsitz in die weitere Längsnut gebracht werden. Es kann pro zwei aneinander gleitverschieblich gelagerte Profilschienen eine einzige Anschlagvorrichtung vorgesehen sein. Diese kann zur Längsrichtung randseitig an den Profilschienen angeordnet sein.

Üblich kann der Profilstrang für eine Profilschiene fabrikseitig mit in Längsrichtung gleich beabstandeten Öffnungen zur Festlegung der aus dem Profilstrang abgelängten Profilschienen an Bauteilen oder dergleichen versehen sein. Die Abstände und Anzahl der Öffnungen können hierbei so gewählt werden, dass jede aus dem Profilstrang abgelängte Profilschiene zumindest zwei Öffnungen aufweist.

In einer weiteren Ausführungsform des Teleskopsystems können drei relativ zueinander linear verschieblich aneinander gelagerte Profilschienen, zwei äußere Profilschienen und eine zwischen den beiden äußeren Profilschienen relativ verschieblich gelagerte mittlere Profilschiene, vorgesehen sein. Sie können relativ zueinander in Längsrichtung und parallel zur Gleitebene aneinander in Längsrichtung abgleitbar angeordnet sein. Die mittlere Profilschiene kann somit zu beiden Seiten hin jeweils mit einer der äußeren Profilschienen in Längsrichtung gleitverschieblich verbunden sein. Hierzu kann die mittlere Profilschiene ein Längsprofil aufweisen, über das sie zu beiden äußeren Profilschienen hin mit der jeweiligen äußeren Profilschiene mechanisch gekoppelt werden kann.

Infolge der vorgesehenen Nut-Feder-Verbindung zwischen den Profilschienen unterscheiden sich deren Längsprofile voneinander. Zur gleitverschieblichen Verbindung können jeweils zwei unterschiedlich ausgebildete Längsprofile miteinander verbunden werden. Hierbei können die beiden äußeren Profilschienen jeweils ein gleiches Längsprofil aufweisen, während die mittlere Profilschiene ein bezüglich der zweiten Querrichtung beidseitig jeweils ein dem der äußeren Profilschienen angepasstes und insbesondere baugleiches Längsprofil aufweist. Die beiden äußeren Profilschienen können baugleich ausgebildet sein.

Die mittlere Profilschiene kann an seinen zu den beiden äußeren Profilschienen hin gewandten Seiten jeweils ein gleiches Profil aufweisen. Die mittlere Profilschiene kann bezüglich der mittigen ersten Spiegelsymmetrieebene senkrecht zur ersten Querrichtung und bezüglich einer mittigen zweiten Spiegelsymmetrieebene senkrecht zur zweiten Querrichtung spiegelsymmetrisch aufgebaut sein. Sie kann einen parallel zur Gleitebene angeordneten Quersteg mit bezüglich der Querrichtung beidendseitigen Führungsnuten aufweisen. Die Anordnung und Ausbildung der Führungsnuten können an beiden Enden des Querstegs gleich ausgebildet sein.

In Fortführung der Erweiterungsmöglichkeiten des Teleskopsystems, kann dasselbe beispielsweise sechs Profilschienen aufweisen, von denen die beiden äußeren Profilschienen ebenfalls ein gleiches Profil aufweisen können, das sich von einer Seite im Wesentlichen in zweiter Querrichtung erstreckt. Die restlichen vier zwischen den beiden äußeren Profilschienen können jeweils beidseitig ein gleiches Längsprofil aufweisen. Es können in Einbaulage bezüglich der zweiten Querrichtung einander benachbarte Profilschienen jeweils unterschiedliche Längsprofile aufweisen.

In vorteilhaften Ausführungsformen weist das Teleskopsystem eines oder mehrerer der vorstehend dargestellten Merkmale und zwar in jedweder Kombination auf. Weitere Einzelheiten und Vorteile der Erfindung werden im Folgenden, ohne Einschränkung des Schutzumfangs, durch die Beschreibung bevorzugter Ausführungsform unter Bezugnahme auf die beigefügten Zeichnungen ersichtlich. In der Beschreibung sind sämtliche Begrifflichkeiten zur Beschreibung der Örtlichkeit, wie oben, unten, vorn, hinten, rechts und links, so gemeint, wie sie in der jeweiligen Figur selbst gezeigt sind, es sei denn, es ist eigens anders definiert. Es zeigen:
Figuren 1A-1D jeweils eine Ansicht einer Ausführungsform eines Teleskopsystems mit drei Profilleisten als Teleskopglieder und zwar in einer Auszugsposition,
Figuren 2A-2D jeweils eine Ansicht der Ausführungsform des Teleskopsystems gemäß Figur 1A-1D, jedoch in einer Einzugsposition,
Figuren 3A-3C, 4A-4B und 5A-5B Darstellungen mit Seitenansichten und Schnittansichten zum Zusammenbau zweier Profilleisten mit Gleitelementen in drei Schritten,
Figuren 6A-6C Seitenansicht und Schnittansichten des Gleitelementes,
Figur 7 eine Seitenansicht einer weiteren Ausführungsform des Teleskopsystems mit zwei Teleskopschienen,
Figur 8 eine Seitenansicht einer weiteren Ausführungsform des Teleskopsystems mit fünf Teleskopschienen
Figuren 9A-9C jeweils eine Ansicht der Ausführungsform des Teleskopsystems gemäß Figuren 1A-1D in der Auszugposition, jedoch mit Anschlagvorrichtung, und
Figuren 10A-10C jeweils eine Ansicht der Ausführungsform des Teleskopsystems gemäß Figuren 9A-9D, jedoch in der Einzugsposition.

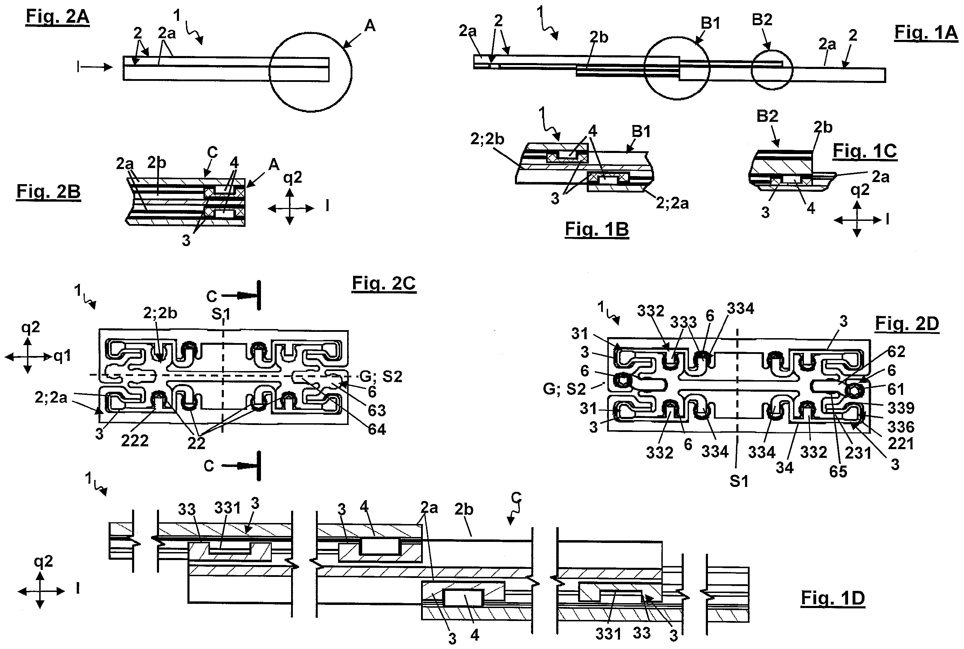

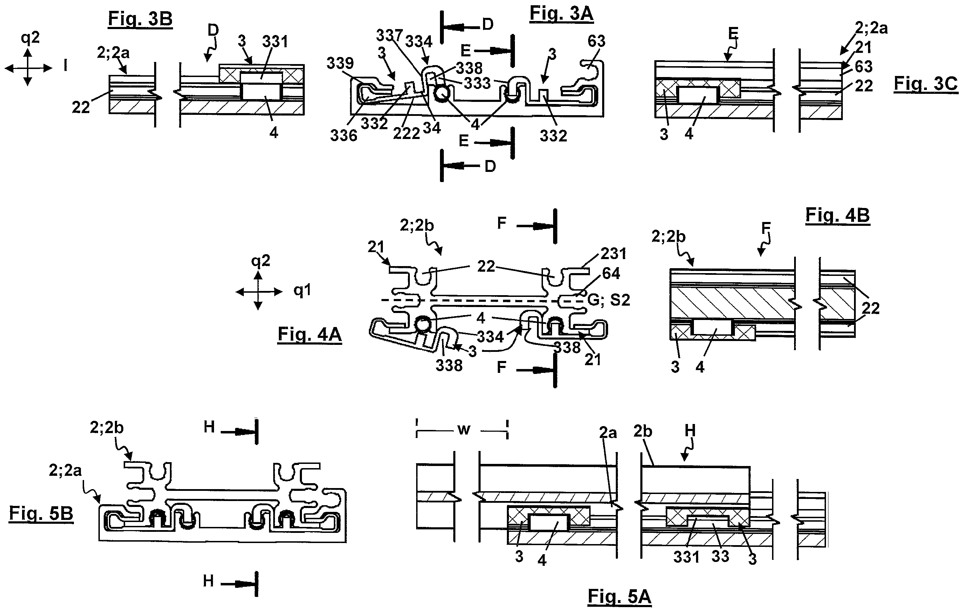

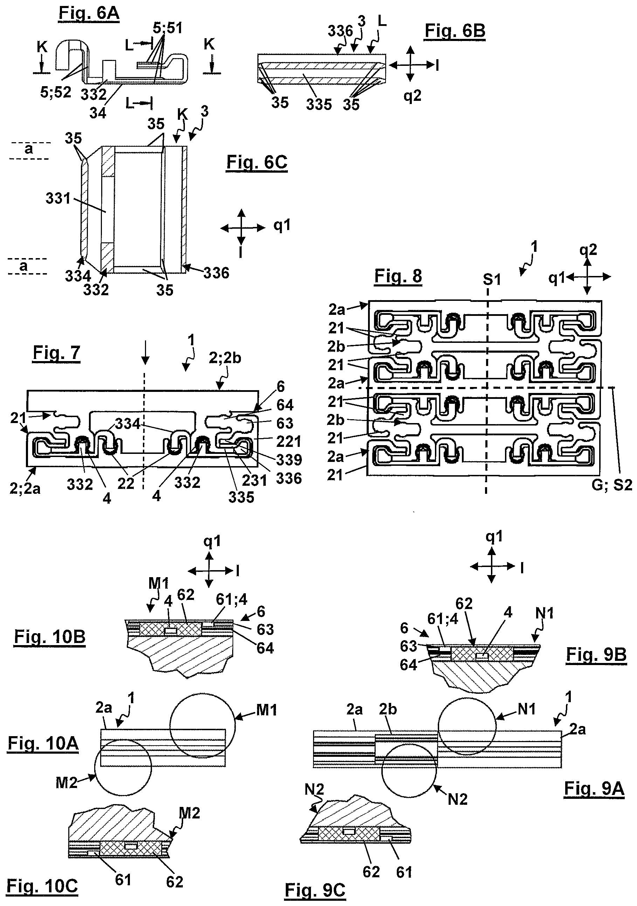

In den Figuren 1-5 und 7-10 werden in verschiedenen Ansichten und Schnittansichten unterschiedliche Ausführungsformen eines Teleskopsystems 1 dargestellt. Das Teleskopsystem 1 weist zumindest zwei aneinander in einer Längsrichtung l linear geführte, über einen in Figur 5A dargestellten Weg w relativ zueinander bewegbare Profilschienen 2 auf. Die Profilschienen 2 sind jeweils mit einem Längsprofil 21 mit Längsnuten 22 und Längsrippen 23 versehen. Gemäß den Figuren 7 und 8 weist das Teleskopsystem 1 zwei bzw. fünf relativ zueinander bewegbare Profilschienen 2 auf. In den übrigen Darstellungen zum Teleskopsystem 1 sind drei Profilschienen 2, zwei äußere erste Profilschienen 2a, hier jeweils mit einem C-Profil, und eine zwischen den beiden äußeren ersten Profilschienen 2a angeordnete mittlere zweite Profilschiene 2b, vorgesehen.

Es sind hier jeweils zwischen zwei aneinander linear geführten Profilschienen 2 vier Gleitelemente 3 vorgesehen, über die diese beiden Profilschienen 2 gleitverschieblich aneinander anliegen. In den Figuren 6A-6C ist jeweils in einer Einzeldarstellung eine Ansicht eines Gleitelements 3 wiedergegeben. Das Gleitelement 3 ist als Profilteil mit sich in Einbaulage in Längsrichtung l erstreckendem Längsprofil 32 ausgebildet. Die in den verschiedenen Ausführungsformen des Teleskopsystems 1 gezeigten Gleitelemente 3 sind baugleich und einstückig. Ferner sind sie aus einem hier nicht dargestellten Kunststoffprofilstrang aus einem Tribopolymer mit eincompoundierten Festschmierstoffen für einen schmiermittelfreien Trockenlauf abgelängt. Die Profilschienen 2 sind jeweils aus einem hier nicht gezeigten Profilstrang aus einem Aluminiumwerkstoff abgelängt. Bedingt durch die Nut-Feder-Verbindung weisen die als Gleitpartner gekoppelten Profilschienen 2 jeweils ein anderes Längsprofil 21 auf.

Die Gleitelemente 3 sind jeweils bezüglich einer durch die Längsrichtung l und eine ersten Querrichtung q1 senkrecht zur Längsrichtung l definierten Gleitebene G an der zugeordneten Profilschiene 2 verschiebungssicher mit einem Klemmelement 4 verbunden. Das Klemmelement 4 ist in einem Klemmsitz hier in einer Längsnut 22 des Längsprofils 21 dieser Profilschiene 2 angeordnet. Dank des Klemmsitzes des Klemmelements 4 kann das Gleitelement 3 verschiebungssicher an der jeweils zugeordneten Profilschiene 2 gehalten werden. Es sind alle Gleitelemente 3 jeweils über ein Klemmelement 4 mit der jeweils zugeordneten Profilschiene 2 verbunden. Dank dieser Maßnahme bleiben die Profilschienen 2 jeweils trotz der Festlegung der Gleitelemente 3 an dem Längsprofil 21 unverändert ausgebildet.

In den hier gezeigten Ausführungsformen des Teleskopsystems 1 sind die Gleitelemente 3 paarig zwischen den zumindest zwei Profilschienen 2 angeordnet. Die Gleitelemente 3 des einen Gleitelementpaars 31 sind axial verschiebungsfest mit der einen der zumindest zwei Profilschienen 2 und die des anderen Gleitelementpaars 31 axial verschiebungsfest mit der anderen der zumindest zwei Profilschienen 2 verbunden sind. Um einen möglichst großen Weg w zu erhalten, sind die Gleitelemente 3 jeweils in einem bezüglich der Längsrichtung l stirnseitigen Bereich, hier sogar stirnseitig bündig mit der ihm zugeordneten Profilschiene 2 angeordnet. Ferner sind die Gleitelemente 3 bezüglich der Längsrichtung l jeweils über ihre gesamte axiale Länge an dieser Profilschiene 2 abgestützt angeordnet. Beide Maßnahmen sind beispielsweise den Figuren 1B, 1C und 2B entnehmbar. Ferner sind die Gleitelemente 3 des Gleitelementpaares 31 bezüglich einer ersten Spiegelsymmetrieebene S1 senkrecht zur ersten Querrichtung q1 spiegelsymmetrisch angeordnet und ausgerichtet. Entsprechend sind die Teile der Längsprofile beider Profilschienen, mit denen die Gleitelemente gekoppelt sind, bezüglich dieser ersten Spiegelsymmetrieebene spiegelsymmetrisch ausgebildet.

Gleitelement 3 und Klemmelement 4 sind bezüglich der Längsrichtung l und darüber hinaus der Gleitebene G formschlüssig aneinander festgelegt. Wie beispielsweise den Figuren 4A-4C entnehmbar, ist das Klemmelement 4 hier als Gewindestift mit einer kreiszylindrischen Grundform ausgebildet. Das Gleitelement 3 weist ein sich in Einbaulage in Längsrichtung l erstreckendes Längsprofil 32 hier mit zwei rippenartigen Längsvorsprüngen 33 jeweils mit einer Aufnahmeausnehmung 331 auf. Im Falle der Festlegung des Gleitelements 3 an einer zugeordneten Profilschiene 2 übergreift das Gleitelement 3 mit einem seiner Längsvorsprünge 33, und zwar mit dessen Aufnahmeausnehmung 331, das in der zugeordneten Längsnut 22 des im Klemmsitz angeordneten Klemmelements 4. Das Klemmelement 4 liegt hier unter gleichzeitiger Verrastung axial beidendseitig formschlüssig und damit verschiebungssicher in der Aufnahmeausnehmung 331 an dem Gleitelement 3 an.

Das Gleitelement 3 weist hier zwei rippenartigen Längsvorsprünge 33 jeweils mit einer Aufnahmeausnehmung 331 auf. Beide rippenartige Längsvorsprünge 33 greifen in eine ihm zugeordnete Längsnut 22 des Längsprofils 21 der Profilschienen 2 ein. Hierbei ist in der Längsnut 22 der einen Profilschiene 2, an der das Gleitelement 3 festgelegt wird, das zugeordnete Klemmelement 4 im Klemmsitz angeordnet. Das Gleitelement 3 ist in Einbaulage über das Klemmelement 4 in der Aufnahmeausnehmung 331 bezüglich der Längsrichtung l verschiebungsfest angeordnet. Das andere der beiden Längsvorsprünge 33 greift lediglich gleitverschieblich in die ihm zugeordnete Längsnut 22 der anderen Profilschiene 2 ein.

Die den Längsvorsprüngen 33 des Gleitelementes 3 zugeordneten Längsnuten 22 der Profilschienen 2 sind in zweiter Querrichtung q2 seitlich geöffnet ausgebildet. Entsprechend erstreckt sich der rippenartige Längsvorsprung 33 in Einbaulage mit seinem freien Endbereich 333 in zweite Querrichtung q2. Die Aufnahmeausnehmung 331 ist, wie beispielsweise Figur 4C entnehmbar, als Einschnitt 332 hier mit einem rechtwinkligen Längsprofil ausgebildet.

Das Gleitelement 3 weist eine bezüglich der zweiten Querrichtung q2 flache Grundform auf. Das Gleitelement 3 weist eine Basis 34 auf. Diese ist in Einbaulage hier parallel zur Gleitebene G angeordnet. Die Basen 34 aller in dem Teleskopsystem 1 eingesetzten Gleitelemente 3 erstrecken sich hier parallel zur Gleitebene G. Die Basen der Gleitelemente 3, die zwischen zwei über diese Gleitelemente 3 gleitverschieblich gekoppelten Profilschienen 2 angeordnet sind, erstrecken sich in einer gleichen Ebene parallel zur Gleitebene G. Die Gleitelemente 3 zweier miteinander über diese Gleitelemente gleitverschieblich gekoppelter Profilschienen 2 sind bezüglich einer ersten Spiegelsymmetrieebene S1 spiegelsymmetrisch angeordnet und ausgerichtet.

In Figur 7 ist eine stirnseitige Ansicht eines Teleskopsystems 1 gezeigt, das lediglich zwei Profilschienen 2, eine hier unten angeordnete erste Profilschiene 2a und eine hier oben angeordnete zweite Profilschiene 2b aufweist. Die beiden Profilschienen 2 liegen über zwei Gleitelementpaare 31 mit jeweils zwei Gleitelementen 3 gleitverschieblich an, wobei ein Gleitelementpaar 31 mit der hier oberen Profilschiene 2 und ein Gleitelementpaar 31 mit der hier unteren Profilschiene 2 jeweils verschiebungssicher anliegen. Die in der stirnseitigen Ansicht gemäß Figur 7 gezeigten Gleitelemente 3 sind verschiebungssicher mit der hier unteren Profilschiene 2 verbunden. Wie deutlich sichtbar, erstrecken sich bei beiden Gleitelementen 3 die beiden Längsvorsprünge 33 gemeinsam von einer Seite der Basis 34 in die zweite Querrichtung q2 und zwar hier bezüglich der zweiten Querrichtung q2 nach innen. Bei beiden Gleitelementen 3 erstreckt sich jeweils ein als erster Längsvorsprung 332 bezeichneter Längsvorsprung 33 mit seinem freien Endbereich 333 in diese gemeinsame Richtung und greift in eine ihm zugeordnete Längsnut 22 der gemäß Figur 7 oberen Profilschiene 2 ein. Wie aus Figur 7 anhand der den freien Endbereich 333 dieses Längsvorsprung 33 umgebende ein Klemmelement 4 repräsentierende Schwärzung ablesbar, ist in dieser Längsnut 22 der oberen Profilschiene 2 ein Klemmelement 4 im Klemmsitz angeordnet. An dieses ist der Längsvorsprung 33 und damit das jeweils zugeordnete Gleitelement 3 an sich bezüglich der Gleitebene G verschiebungssicher angedockt. Der andere als zweiter Längsvorsprung 334 bezeichnete Längsvorsprung 33 erstreckt sich von der Basis 34 mit einem Teilabschnitt 337 in Richtung zu der hier oberen Profilschiene 2 hin. Er ist in einem an den Teilabschnitt 337 anschließenden freien Endbereich 333 unter Ausbildung einer Aufnahmenut 335 um eine Krümmungsachse parallel zur Längsrichtung l hakenartig umgebogen ausgebildet. Der freie Endbereich 333 des zweiten Längsvorsprungs 334 erstreckt sich zu der in Figur 7 unteren Profilschiene 2 hin. Der freie Endbereich 333 greift in eine zugeordnete Längsnut 22 dieser unteren Profilschiene 2 ein. Wie an der hier unvollständigen Schwärzung ablesbar, ist an dieser in Figur 7 gezeigten Stirnseite des Teleskopsystems 1 in der Längsnut 22 kein Klemmelement 4 vorgesehen. Somit sind die beiden Gleitelemente 3 an dieser Stelle gleitverschieblich mit der hier unteren Profilschiene 2 verbunden. Die diesen Längsvorsprüngen 33 zugeordneten Längsnuten 22 sind jeweils in der zweiten Querrichtung q2 seitlich geöffnet ausgebildet.

Wie ferner Figur 7 entnehmbar, verläuft der zweite Längsvorsprung 334 mit seinem Teilabschnitt 337 in zweiter Querrichtung q2 hier zwischen der Längsnut 22 der hier oberen Profilschiene 2 für den ersten Längsvorsprung 332 und der Längsnut 22 der hier unteren Profilschiene 2 für den zweiten Längsvorsprung 334. In diesem Bereich liegen das Gleitelement 3 und die jeweilige Längsnut 22 über hier als erste Gleitführungsflächen 51 bezeichnete Gleitführungsflächen 5 spielfrei oder nahezu spielfrei aneinander an. Diese Gleitführungsflächen 51 sind hier senkrecht zur ersten Querrichtung q1 oder, bezüglich Figur 7, senkrecht angeordnet. Damit werden die beiden Profilschienen 2 bezüglich der ersten Querrichtung q1 über das Gleitelement an den ersten Gleitführungsflächen 51 führungsssicher aneinander gehalten.

Wie unter anderem den Figuren 6 und 7 entnehmbar, erstreckt sich in Verlängerung der Basis 34 ein rippenartiger weiterer Längsvorsprung 336 und zwar parallel zur Gleitebene G und gemäß den in den Figuren gezeigten Ausführungsformen des Teleskopsystems 1 bezüglich der Längsrichtung l radial nach außen. Der rippenartige weitere Längsvorsprung greift in eine hier radial äußere weitere Längsnut 221 einer zugeordneten Profilschiene 2, gemäß Figur 7 der unteren Profilschiene 2, ein. Diese weitere Längsnut 221 ist in erster Querrichtung q1 und zwar hier bezüglich der Längsrichtung l radial nach innen seitlich geöffnet ausgebildet. Ähnlich dem zweiten Längsvorsprung 334, ist der weitere Längsvorsprung 336 in seinem freien Endbereich 333 parallel zur Längsrichtung l hakenartig umgebogen ausgebildet. Hierdurch definiert er eine weitere Aufnahmenut 338. Diese weitere Aufnahmenut 338 ist gleich der weiteren Längsnut 221 in erster Querrichtung q1 und zwar hier bezüglich der Längsrichtung l radial nach innen seitlich geöffnet ausgebildet. In die weitere Aufnahmenut 338 greift in Einbaulage eine an der gemäß Figur 7 oberen Profilschiene 2 vorgesehene Aufnahmerippe 231 ein. Der weitere Längsvorsprung 336 wird bezüglich seiner axialen Erstreckung in erster Querrichtung q1 zumindest über die axiale Erstreckung seiner weiteren Aufnahmenut 338 bezüglich der Längsrichtung l radial nach innen definiert. Somit liegen die beiden Längsprofile 2 in dem Bereich der weiteren Aufnahmenut 338 an der Wandung der weiteren Längsnut 221 der hier unteren Profilschiene 2 und der Wandung der Aufnahmerippe 231 der hier oberen Profilschiene 2 und zwar über den weiteren Längsvorsprung 336 des Gleitelemente 3 spielfrei oder nahezu spielfrei an. Die Flächen, an den diese spielfreie oder nahezu spielfreie Anlage erfolgt, sind hier als zweite Gleitführungsflächen 52 bezeichnete Gleitführungsflächen 5 ausgebildet. Die zweiten Gleitführungsflächen 51 weisen in bzw. gegen zweite Querrichtung q2. Sie sind in den Figuren horizontal angeordnet. Damit sind die beiden Profilschienen 2 bezüglich der zweiten Querrichtung q2 über das Gleitelement 3 führungssicher aneinander gehalten angeordnet.

In der Montage wird einer der beiden Längsvorsprünge 33, der dieser Längsnut 22 zugeordnet ist, mit seiner Aufnahmeausnehmung 331 axial über das Klemmelement 4 verschoben und unter formschlüssiger Aufnahme des Klemmelements 4 in die Aufnahmeausnehmung 331 zum Klemmelement 4 hin abgesenkt. In den Figuren 3A-5C sind in Seitenansichten und Schnittansichten verschiedene Montageschritte zum Zusammenbau zweier Profilschienen 2 zu dem Teleskopsystem 1 dargestellt. Gemäß den Figuren 3A-3C und den Figuren 4A-4B ist die Montage der jeweils einen Profilschiene 2 zugeordneten Gleitelementpaar 31 dargestellt. Hierbei sind bereits zuvor die erforderlichen Klemmelemente 4 an den zugewiesenen Stellen in der jeweiligen Längsnut 22 in Klemmsitz gebracht. Gemäß Figur 3A ist das hier rechte Gleitelement 3 bereits verschiebungssicher mit der hier unteren Profilschiene 2 verbunden, indem das Gleitelement 3 formschlüssig mit dem ihm zugeordneten Klemmelement 4 verbunden ist. Gemäß Figur 3B wird das hier linke Gleitelement 3 zunächst mit seinem weiteren Längsvorsprung 336 in Eingriff mit der weiteren Längsnut 221 gebracht. Parallel dazu wird das Gleitelement 3 an der weiteren Längsnut 221 hier nach oben hin so verschwenkt, dass es in der weiteren Längsnut 221 mit seinem die Aufnahmeausnehmung 331 aufweisenden zweiten Längsvorsprung 334 über das zugeordnete Klemmelement 4 gleitverschoben werden kann und mit seiner Aufnahmeausnehmung 331 bezüglich der zweiten Querrichtung q2 fluchtend zu dem Klemmelement 4 positioniert ist. Dies wird in Figur 3B gezeigt. Anschließend wird das Gleitelement 3 über das Klemmelement 4 herabgeschwenkt, wodurch das Klemmelement 4 formschlüssig mit dem Gleitelement verbunden wird. Dies wird in Figur 3C gezeigt.

Ähnlich verläuft der Vorgang bei der Montage des Gleitelements 3 an der anderen Profilschiene 2 welches in den Figuren 4A-4B gezeigt ist. Hier ist das hier rechte Gleitelement 3 bereits mit der anderen Profilschiene 2 verschiebungssicher verbunden, während das hier linke Gleitelement 3 noch in der Montage begriffen ist. Hierzu wird das hier linke Gleitelement 3 mit der Aufnahmenut 335 seines weiteren Längsvorsprung 336 auf die Aufnahmerippe 231 der anderen Profilschiene 2 in Längsrichtung l aufgeschoben und gleichzeitig an der Aufnahmerippe 23 in zweiter Querrichtung q2 verschwenkt, bis auch hier die Aufnahmeausnehmung 331 bezüglich der zweiten Querrichtung q2 fluchtend zu dem ihm zugeordneten Klemmelement 4 positioniert ist. Anschließend wird wieder das Gleitelement 3 über das Klemmelement 4 unter formschlüssigen Aufnahme desselben herab verschwenkt.

Mit dem Eingriff der beiden Längsvorsprünge, d.h. des ersten Längsvorsprung und des zweiten Längsvorsprung, des Gleitelements 3 jeweils in zweiter Querrichtung q1 in die jeweils zugeordnete Längsnut 22 der jeweiligen Profilschiene wird unter anderem in erste Querrichtung q1 eine wirksame Nutfederverbindung erzielt. Mit dem Eingriff des weiteren Längsvorsprungs 336 des Gleitelements 3 in die zugeordnete weitere Längsnut 221 und der Aufnahmerippe 231 in die weitere Aufnahmenut 338 des weiteren Längsvorsprung 336 wird eine unter anderem bezüglich der zweiten Querrichtung q2 wirksame Nutfederverbindung gezielt. Dies bedingt, dass die beiden Profilschienen in der Montage stirnseitig in Längsrichtung l ineinander geschoben werden müssen. In den Figuren 5A-5C werden die beiden mit den Gleitelementen 3 bestückten Profilschienen 2 stirnseitig ineinander verschoben. Zur Erleichterung dieses Montagevorgangs sind, wie oben beschrieben, mehrere Maßnahmen vorgesehen. Eine davon ist, dass die Gleitführungsflächen 5 der Gleitelemente 3 jeweils eine in Längsrichtung l wirksame Anfasung in Form von Eingangsschrägen 35 aufweisen. Ferner sind die Eingangsschrägen 35 der ersten Gleitführungsflächen 51 in Längsrichtung l um den in Figur 6C gezeigten Betrag a beabstandet zu den Eingangsschrägen 35 der zweiten Gleitführungsflächen 52 angeordnet. Hierdurch erfolgt das stirnseitige "Einfädeln" der Profilschienen 2 an den jeweiligen Gleitführungsflächen 51;52 bezüglich einer zur Längsrichtung l axialen Einführungsstrecke über die axiale Erstreckung der Gleitelemente 3 örtlich versetzt. Zudem sind die ersten Gleitführungsflächen 51 bezüglich der Längsrichtung l radial innen und die zweiten Gleitführungsflächen 52 radial außen angeordnet, welches ebenfalls ein versetztes Einfädeln an den ersten Gleitführungsflächen 51 zu den zweiten Gleitführungsflächen 52 ermöglicht.

Die weitere Längsnut 221 weist eine in erster Querrichtung q1 wirksame Hinterschneidung 339 auf. An dieser ist der der weiteren Längsnut angepasste weitere Längsvorsprung 332 gegen eine mögliche Relativbewegung in erster Querrichtung q1 formschlüssig gehalten angeordnet. Durch diese Maßnahmen können die beiden Profilschienen 2 sowie das die Aufnahmerippe 231 umklammernde Gleitelement gegenüber einer Relativbewegung in erster Querrichtung zumindest lagestabilisiert werden.

Zur Kippsicherheit ist in dem Längsprofil 21 der in Figur 7 unteren Profilschiene 2 für das Gleitelement 3 eine in zweite Querrichtung q2 seitlich geöffnete zusätzliche Längsnut 222 vorgesehen. Das Gleitelement 3 ist formschlüssig in der zusätzlichen Längsnut 222 angeordnet. Hierzu liegt es mit seiner Basis 34 flächig auf dem Grund der Längsnut 222 auf und sich in erster Querrichtung q1 an beiden Seiten ab. Die Abstützung erfolgt an der einen Seite über seinen weiteren Längsvorsprung 336 in der weiteren Längsnut 221. An der anderen Seite erfolgt die Abstützung außenseitlich an der dem zweiten Längsvorsprung 334 zugeordneten Längsnut 22 und zwar über den Teilabschnitt 337 dieses Längsvorsprunges 336.

Zur Begrenzung des Weges w zweier aneinander geführter relativ zueinander bewegbarer Profilschienen 2 ist eine Anschlagvorrichtung 6 vorgesehen, die vornehmlich in den Figuren 9A-10C gezeigt ist. Die Anschlagvorrichtung 6 weist zwei bezüglich der Längsrichtung l axial beabstandeten Endanschlägen 61 und ein mit den Endanschlägen 61 zusammenwirkendes Anschlagelement 62 auf. Als Endanschläge 61 dienen hier Klemmelemente, die gleich den zuvor beschriebenen Klemmelementen 4 ausgebildet sind. Zusätzlich weisen die Klemmelemente 4, welche hier nicht dargestellt sind, in Längsrichtung l wirksame Dämpfer auf. Die Klemmelemente 4 sind jeweils im Stirnseitenbereich einer der beiden Profilschienen 2 in der Anschlagsnut 63 festgelegt. Das Anschlagelement 62 ist in einer weiteren Anschlagsnut 64 mittels eines weiteren Klemmelements 4 hier bezüglich der Längsrichtung l mittig festgelegt. Das Anschlagelement 62 ragt zum Anschlag gegen die beiden Endanschläge 61 aus der weiteren Anschlagnut 64 zwischen den beiden Endanschlägen 61 in die Anschlagnut 63 hinein. Wie beispielsweise aus Figur 2C ersichtlich, weist die weitere Anschlagnut 63 hier zwei in zweite Querrichtung q1 eingebrachte zur Gleitebene G spiegelsymmetrische Führungsnuten 65 auf, in die hinein das Anschlagelement 62 bei der Montage verrastend eingreift. Zur Montage wird das Klemmelement 4 an bestimmter Stelle in der weiteren Anschlagnut 63 festgeklemmt. Dann wird das Anschlagelement 62 unter Verrastung in den Führungsnuten 65 mit seiner Aufnahmeausnehmung 331 in erster Querrichtung q1 über das Klemmelement 4 gebracht.

Gemäß den Figuren 1A-5C und 8A-9C weist das Teleskopsystem 1 drei Profilschienen 2, d.h. zwei hier außen angeordnete erste Profilschienen 2a und eine zwischen den beiden ersten Profilschienen 2a angeordnete zweite Profilschiene 2b auf. Es ist in der Regel ausreichend, lediglich auf einer Seite des Längsprofils 21 zweier Profilschienen 2 vorzusehen. Wegen der Anschlagsnuten 63,64 stellt sich bei einer einseitigen Anordnung der Anschlagvorrichtung 6 eine Asymmetrie hinsichtlich des Querschnitts der hier unteren ersten Profilschiene 2a ein. Gemäß Figur 2D ist die Anschlagvorrichtung 6 für die Wegbegrenzung zwischen der oberen äußeren Profilschiene 2 und der mittleren Profilschiene 2 an der linken Seite des Teleskopsystems 1 und die Anschlagvorrichtung 6 für die Wegbegrenzung zwischen der unteren äußeren Profilschiene 2 und der mittleren Profilschiene 2 an der rechten Seite des Teleskopsystems 1 angeordnet. Dennoch können die beiden äußeren ersten Profilschienen 2a baugleich sein, indem diese mit ihren Längsprofilen 21 einander zugewandt und um die zweite Querachse um 180° relativ zueinander verdreht angeordnet sind. Die mittlere zweite Profilschiene 2b weist an ihren zu den beiden äußeren ersten Profilschienen 2a hin gewandten Seiten jeweils ein gleiches Längsprofil 21 auf, das gleich dem Längsprofil 21 der anhand von Figur 7 erläuterten oberen zweiten Profilschiene 2b ist.

Das in Figur 8 in einer stirnseitigen Ansicht gezeigte Teleskopsystem 1 weist fünf Teleskopschienen 2 auf: Zwei außen angeordneten erste Profilschienen 2a, eine mittig angeordnete erste Profilschiene 2a, beidseitig mit gleichen Längsprofil 21 versehen, und zwei jeweils zwischen einer der außen angeordneten ersten Profilschiene 2a und der mittig angeordneten ersten Profilschiene 2a zweite Profilschiene 2b beidseitig mit gleichen Längsprofil 21 versehen. Hieraus wird deutlich, dass die Anzahl der Profilschienen 2 erweiterbar ist, indem die aneinander über die Gleitelemente gleitverschieblich gelagerten Profilschienen 2 so kombiniert werden, dass sie an einer der einander zugewandten Seiten ein Längsprofil 21 der ersten Profilschiene 2a und an der anderen der einander zugewandten Seite ein Längsprofil 21 der zweiten Profilschiene 2b aufweisen.

### Bezugszeichenliste

- 1: Teleskopsystem
- 2: Profilschiene
- 21: Längsprofil
- 22: Längsnut
- 221: weitere Längsnut
- 222: zusätzliche Längsnut
- 23: Längsrippe
- 231: Aufnahmerippe
- 2a: erste Profilschiene
- 2b: zweite Profilschiene
- 3: Gleitelement
- 31: Gleitelementpaar
- 32: Längsprofil
- 33: Längsvorsprung
- 331: Aufnahmeausnehmung
- 332: erster Längsvorsprung
- 333: freier Endbereich
- 334: zweiter Längsvorsprung
- 335: Aufnahmenut
- 336: weiterer Längsvorsprung
- 337: Teilabschnitt
- 338: weitere Aufnahmenut
- 339: Hinterschneidung
- 34: Basis
- 35: Eingangsschräge
- 4: Klemmelement
- 5: Gleitführungsfläche
- 51: erste Gleitführungsfläche
- 52: zweite Gleitführungsfläche
- 6: Anschlagvorrichtung
- 61: Endanschlag
- 62: Anschlagelement
- 63: Anschlagnut
- 64: weitere Anschlagnut
- 65: Führungsnut
- G: Gleitebene
- S1: erste Spiegelsymmetrieebene
- S2: zweite Spiegelsymmetrieebene
- a: Abstand
- 1: Längsrichtung
- q1: erste Querrichtung
- q2: zweite Querrichtung
- w: Weg

## Patentansprüche

1. Teleskopsystem (1), aufweisend zumindest zwei aneinander in Längsrichtung (1) linear geführte, über einen Weg relativ zueinander bewegbare Profilschienen (2;2a;2b), die jeweils ein Längsprofil (21) mit Längsnuten (22) und/oder Längsrippen (23) aufweisen und aus einem Profilstrang auf eine bestimmte Länge abgelängt sind, wobei an jeder Profilschiene (2;2a;2b) zumindest ein Gleitelement (3) festgelegt ist, über das die zumindest zwei Profilschienen (2;2a;2b) gleitverschieblich aneinander anliegen und das zumindest bezüglich der Längsrichtung (1) axial verschiebungsfest an dem Längsprofil (21) der ihm zugeordneten Profilschiene (2;2a;2b) festgelegt angeordnet ist, wobei das Gleitelement (3) zumindest bezüglich einer durch die Längsrichtung (l) und eine erste Querrichtung (q1) senkrecht zur Längsrichtung (l) definierten Gleitebene (G)an der Profilschiene (2;2a;2b) verschiebungsfest mit einem Klemmelement (4) verbunden ist, wobei das Klemmelement (4) in einem Klemmsitz an dem Längsprofil (21) der Profilschiene (2;2a;2b) und zwar in oder an einer Längsnut (22) und/oder an einer Längsrippe (23) angeordnet ist, und wobei zum Klemmsitz des Klemmelements (4) an dem Längsprofil (21) und Festlegen des Gleitelements (3) an der jeweiligen Profilschiene (2; 2a; 2b) keine weiteren Vorkehrungen und konstruktiven Veränderungen der aus einem Profilstrang abgelängten Profilschiene (2; 2a; 2b) erfolgt sind.

2. Teleskopsystem (1) nach Anspruch 1, **dadurch gekennzeichnet, dass** das Klemmelement (4) eine zylindrische, teilzylindrische, halbzylindrische, prismatische oder kugelartige Form aufweist, insbesondere als Bolzen, Gewindebolzen, Stift, Gewindestift oder Kugel ausgebildet ist.

3. Teleskopsystem (1) nach Anspruch 1 oder 2, **dadurch gekennzeichnet, dass** das Gleitelement (3) zumindest einen rippenartigen Längsvorsprung (33) mit einer Aufnahmeausnehmung (331) aufweist und dass der zumindest eine rippenartige Längsvorsprung (33) das Klemmelement (4) unter Aufnahme des Klemmelementes (4) in die Aufnahmeausnehmung (331) übergreift.

4. Teleskopsystem (1) nach Anspruch 3, **dadurch gekennzeichnet, dass** das Gleitelement (3) zwei rippenartige Längsvorsprünge (33) aufweist, wobei das Gleitelement (3) in Einbaulage mit einem der zumindest zwei Längsvorsprünge (33) über das Klemmelement (4) an dem Längsprofil (21) einer dem Gleitelement (3) zugeordneten Profilschiene (2;2a;2b) festgelegt ist und mit dem anderen der zumindest zwei Längsvorsprünge (33) mit dem Längsprofil (21) der anderen Profilschiene (2;2a;2b) in Längsrichtung (l) gleitverschieblich gekoppelt ist.

5. Teleskopsystem (1) nach Anspruch 4, **dadurch gekennzeichnet, dass** das Gleitelement (3) eine flache Grundform mit einer Basis (34) parallel oder etwa parallel zur Gleitebene (G) aufweist, wobei sich die zumindest zwei rippenartigen Längsvorsprünge (33) in einer gemeinsamen Richtung senkrecht oder etwa senkrecht zur Gleitebene (G) von einer Seite der Basis (34) weg erstrecken, und/oder sich ein rippenartiger weiterer Längsvorsprung (336) in oder etwa in erster Querrichtung (q1) von der Basis (34) weg erstreckt.

6. Teleskopsystem (1) nach Anspruch 5, **dadurch gekennzeichnet, dass** der rippenartige weitere Längsvorsprung (336) des Gleitelements (3) einen freien Endbereich (333) aufweist, der parallel zur Längsrichtung (l) hakenartig umgebogen ausgebildet ist, wobei der freie Endbereich (333) eine in erster Querrichtung (q1) seitlich geöffnete weitere Aufnahmenut (338) für eine Aufnahmerippe (231) einer zugeordneten Profilschiene (2;2a;2b) begrenzt.

7. Teleskopsystem (1) nach Anspruch 5 oder 6, **dadurch gekennzeichnet, dass** der rippenartige weitere Längsvorsprung (336) in erster oder etwa in erster Querrichtung (q1) in eine weitere Längsnut (221) einer zugeordneten Profilschiene (2;2a;2b) eingreift.

8. Teleskopsystem (1) nach einem der Ansprüche 5 bis 7, **dadurch gekennzeichnet, dass** der rippenartige weitere Längsvorsprung (336) bezüglich der zweiten Querrichtung (q2) federelastisch wirksam ausgebildet ist.

9. Teleskopsystem (1) nach einem der Ansprüche 5 bis 8, **dadurch gekennzeichnet, dass** das Gleitelement (3) zur Führung der an ihm gleitverschieblich gelagerten Profilschiene (2;2a;2b) als Gleitführungsflächen (5) ausgebildete Seitenflächen aufweist, von denen einige als erste Gleitführungsflächen (51) ausgebildete Gleitführungsflächen (5) senkrecht zur ersten Querrichtung (q1) oder einige als zweite Gleitführungsflächen (52) ausgebildete Gleitführungsflächen (5) senkrecht zur zweiten Querrichtung (q2) senkrecht zur ersten Querrichtung (q1) angeordnet sind.

10. Teleskopsystem (1) nach Anspruch 9, **dadurch gekennzeichnet, dass** die Gleitführungsflächen (5; 51; 52) zur leichteren Montage bezüglich der Längsrichtung (l) beidendseitig Eingangsschrägen (35) aufweisen.

11. Teleskopsystem (1) nach einem der Ansprüche 5 bis 10, **dadurch gekennzeichnet, dass** die Basen (34) der zwischen den beiden Profilschienen (2;2a;2b) angeordneten Gleitelemente (3) in einer gemeinsamen Ebene parallel zur Gleitebene (G) angeordnet sind.

12. Teleskopsystem (1) nach einem der Ansprüche 5 bis 11, **dadurch gekennzeichnet, dass** die zwischen den beiden Profilschienen (2;2a;2b) angeordneten Gleitelemente (3) bezüglich einer mittigen ersten Spiegelsymmetrieebene (S1) senkrecht zur ersten Querrichtung (q1) spiegelsymmetrisch zueinander angeordnet und/oder ausgerichtet sind.

13. Teleskopsystem (1) nach einem der Ansprüche 1 bis 12, **dadurch gekennzeichnet, dass** die Gleitelemente (3) baugleich und/oder jeweils einstückig ausgebildet sind.

14. Teleskopsystem (1) nach einem der Ansprüche 1 bis 13, **dadurch gekennzeichnet, dass** zur Begrenzung des Weges (W) zweier aneinander geführter relativ zueinander bewegbarer Profilschienen (2;2a;2b) eine Anschlagvorrichtung (3) mit zwei Endanschlägen (61) und einem mit den Endanschlägen (61) zusammenwirkendes Anschlagelement (62) vorgesehen ist, wobei die zwei Endanschläge (61) in einer in dem Längsprofil (32) einer der beiden Profilschienen (2;2a;2b) vorgesehenen Anschlagnut (63) voneinander beabstandet jeweils an einem bestimmten Ort über die Längserstreckung der Anschlagnut (63) fixiert sind und das Anschlagelement (62) in einer in dem Längsprofil(22) der anderen Profilschiene (2;2a;2b) vorgesehen weiteren Anschlagnut (64) lagefixiert oder gleitverschieblich angeordnet ist, wobei das Anschlagelement (62) zum Anschlag gegen die beiden Endanschläge (61) aus der weiteren Anschlagnut (64) zwischen den beiden Endanschlägen (61) in die Anschlagnut (63) hineinragend angeordnet ist.

15. Teleskopsystem (1) nach Anspruch 14, **dadurch gekennzeichnet, dass** die Endanschläge (61) jeweils durch ein Klemmelement (4) gebildet werden und/oder dass das Anschlagelement (62) mittels eines Klemmelements (4) in der ihm zugeordneten weiteren Anschlagnut (64) lagefixiert angeordnet ist.

## Claims

1. A telescopic system (1) having at least two profile rails (2; 2a; 2b) which are linearly guided against each other in the longitudinal direction (I) and which are moveable relative to each other over a distance and which each have a longitudinal profile (21) having longitudinal grooves (22) and/or longitudinal ribs (23) and which are cut to a given length from a profile section, wherein fixed at each profile rail (2; 2a; 2b) is at least one sliding element (3), by way of which the at least two profile rails (2; 2a; 2b) bear slidingly displaceable against each other and which is arranged axially fixedly at least with respect to the longitudinal direction (I) of the longitudinal profile (21) of the profile rails (2; 2a; 2b) associated therewith, wherein the sliding element (3) is connected to a clamping element (4) in non-displaceable relationship on the profile rail (2; 2a; 2b) at least with respect to a sliding plane (G) defined by the longitudinal direction (I) and a first transverse direction (q1) perpendicularly to the longitudinal direction (I), wherein the clamping element (4) is arranged with a clamping fit on the longitudinal profile (21) of the profile rail (2; 2a; 2b), more specifically in or at a longitudinal groove (22) and/or on a longitudinal rib (23), and wherein for fixing the clamping element (4) on the longitudinal profile (21) and for fixing the sliding element (3) to the respective profile rail (2; 2a; 2b) no further processing and structural modifications of the respective profile rail (2; 2a; 2b) is performed.

2. A telescopic system (1) as set forth in claim 1 **characterised in that** the clamping element (4) is of a cylinderical, part-cylindrical, semicylindrical, prismatic or ball-like shape, in particular in the form of a bolt, threaded bolt, pin, threaded pin or ball.

3. A telescopic system (1) as set forth in claim 1 or 2 **characterised in that** the sliding element (3) has at least one rib-like longitudinal projection (33) having a receiving recess (331) and the at least one rib-like longitudinal projection (33) engages over the clamping element (4) with the clamping element (4) being received in the receiving recess (331).

4. A telescopic system (1) as set forth in claim 3 **characterised in that** the sliding element (3) has two rib-like longitudinal projections (33), wherein the sliding element (3) in the installed position is fixed with one of the at least two longitudinal projections (33) by way of the clamping element (4) on the longitudinal profile (21) of a profile rail (2; 2a; 2b) associated with the sliding element (3) and is coupled with the other of the at least two longitudinal projections (33) to the longitudinal profile (21) of the other profile rail (2; 2a; 2b) slidingly displaceably in the longitudinal direction (I).

5. A telescopic system (1) as set forth in claim 4 **characterised in that** the sliding element (3) has a flat basic shape with a base (34) parallel or approximately parallel to the sliding plane (G), wherein the at least two rib-like longitudinal projections (33) extend in a common direction perpendicularly or approximately perpendicularly to the sliding plane (G) away from one side of the base (34) and/or a rib-like further longitudinal projection (336) extends in or approximately in the first transverse direction (q1) away from the base (34).

6. A telescopic system (1) as set forth in claim 5 **characterised in that** the rib-like further longitudinal projection (336) of the sliding element (3) has a free end region (333) which is curved in a hook-like configuration parallel to the longitudinal direction (I), wherein the free end region (333) delimits a further receiving groove (338) open laterally in the first transverse direction (q1) for a receiving rib (231) of an associated profile rail (2; 2a; 2b).

7. A telescopic system (1) as set forth in one of claims 5 or 6 **characterised in that** the rib-like further longitudinal projection (336) engages in the first or approximately the first transverse direction (q1) into a further longitudinal groove (221) of an associated profile rail (2; 2a; 2b).

8. A telescopic system (1) as set forth in one of claims 5 through 7 **characterised in that** the rib-like further longitudinal projection (336) is operative resiliently with respect to the second transverse direction (q2).

9. A telescopic system (1) as set forth in one of claims 5 through 8 **characterised in that** the sliding element (3) for guiding the profile rail (2; 2a; 2b) mounted slidingly displaceably thereon has side surfaces which are in the form of sliding guide surfaces (5) and of which some sliding guide surfaces (5) in the form of first sliding guide surfaces (51) are arranged perpendicularly to the first transverse direction (q1) or some sliding guide surfaces (5) in the form of second sliding guide surfaces (52) are arranged perpendicularly to the second transverse direction (q2) perpendicularly to the first transverse direction (q1).

10. A telescopic system (1) as set forth in claim 9 **characterised in that** the sliding guide surfaces (5, 51, 52) have inclined insertion portions (35) at both ends for easier mounting with respect to the longitudinal direction (I).

11. A telescopic system (1) as set forth in one of claims 5 through 10 **characterised in that** the bases (34) of the sliding elements (3) arranged between the two profile rails (2; 2a; 2b) are arranged in a common plane parallel to the sliding plane (G).

12. A telescopic system (1) as set forth in one of claims 5 through 11 **characterised in that** the sliding elements (3) arranged between the two profile rails (2; 2a; 2b) are arranged and/or oriented in mirror-image symmetrical relationship with each other relative to a central first mirror-image plane of symmetry (S1) perpendicularly to the first transverse direction (q1).

13. A telescopic system (1) as set forth in one of claims 1 through 12 **characterised in that** the sliding elements (3) are of an identical structure and/or are each of an integral structure.

14. A telescopic system (1) as set forth in one of claims 1 through 13 **characterised in that** for limiting the travel distance (W) of two profile rails (2; 2a; 2b) which are guided against each other and are moveable relative to each other there is provided an abutment device (3) having two end abutments (61) and an abutment element (62) cooperating with the end abutments (61), wherein the two end abutments (61) are fixed in mutually spaced relationship in an abutment groove (63) provided in the longitudinal profile (32) of one of the two profile rails (2; 2a; 2b) at a respective given location over the longitudinal extent of the abutment groove (63) and the abutment element (62) is arranged slidingly displaceably or fixed in position in a further abutment groove (64) provided in the longitudinal profile (22) of the other profile rail (2; 2a; 2b), wherein the abutment element (62) is arranged to abut against the two end abutments (61) projecting out of the further abutment groove (64) between the two end abutments (61) into the abutment groove (63).

15. A telescopic system (1) as set forth in claim 14 **characterised in that** the end abutments (61) are respectively formed by a clamping element (4) and/or the abutment element (62) is arranged fixed in position by means of a clamping element (4) in the further abutment groove (64) associated therewith.

## Revendications

1. Système télescopique (1), présentant au moins deux rails profilés (2; 2a; 2b) guidés linéairement l'un contre l'autre dans la direction longitudinale (1) et mobiles l'un par rapport à l'autre sur une course, qui présentent chacun un profilé longitudinal (21) avec des rainures longitudinales (22) et/ou des nervures longitudinales (23) et sont coupés à une longueur déterminée à partir d'un tronçon de profilé, un élément coulissant (3) étant fixé à chaque rail profilé (2; 2a; 2b) par lequel les au moins deux rails profilés (2; 2a; 2b) s'appliquent l'un contre l'autre de manière à pouvoir glisser, et qui, au moins par rapport à la direction longitudinale (1), est fixé de manière à ne pas pouvoir se déplacer axialement sur le profilé longitudinal (21) du rail profilé (2; 2a; 2b) qui lui est associé, l'élément coulissant (3) étant relié de manière à ne pas pouvoir se déplacer à un élément de serrage (4) au moins par rapport à un plan de glissement (G) défini par la direction longitudinale (1) et une première direction transversale (q1) perpendiculaire à la direction longitudinale (1), l'élément de serrage (4) étant fixé dans un logement de serrage sur le profilé longitudinal (21) du rail profilé (2; 2a; 2b), et plus précisément dans ou sur une rainure longitudinale (22) et/ou sur une nervure longitudinale (23), et dans lequel, pour l'ajustement par serrage de l'élément de serrage (4) sur le profilé longitudinal (21) et la fixation de l'élément coulissant (3) sur le rail profilé respectif (2; 2a; 2b), aucune autre disposition ni modification constructive du rail profilé (2; 2a; 2b) découpé à partir du tronçon profilé n'est effectuée.

2. Système télescopique (1) selon la revendication 1, **caractérisé en ce que** l'élément de serrage (4) présente une forme cylindrique, partiellement cylindrique, semi-cylindrique, prismatique ou sphérique, et est notamment conçu comme un boulon, un boulon fileté, une goupille, une vis sans tête ou une bille.

3. Système télescopique (1) selon la revendication 1 ou 2,
**caractérisé en ce que** l'élément coulissant (3) présente au moins une saillie longitudinale (33) en forme de nervure avec un évidement de réception (331) et **en ce que** ladite au moins une saillie longitudinale (33) en forme de nervure chevauche l'élément de serrage (4) en recevant l'élément de serrage (4) dans l'évidement de réception (331).

4. Système télescopique (1) selon la revendication 3, **caractérisé en ce que** l'élément coulissant (3) présente deux saillies longitudinales (33) en forme de nervures, l'élément coulissant (3) étant fixé, en position de montage, par l'une des au moins deux saillies longitudinales (33), par l'intermédiaire de l'élément de serrage (4), sur le profilé longitudinal (21) d'un rail profilé (2; 2a; 2b) et est couplé par l'autre des au moins deux saillies longitudinales (33) avec le profil longitudinal (21) de l'autre rail profilé (2; 2a; 2b) de manière à pouvoir coulisser dans la direction longitudinale.

5. Système télescopique (1) selon la revendication 4, **caractérisé en ce que** l'élément coulissant (3) présente une forme de base plate avec une base (34) parallèle ou à peu près parallèle au plan de coulissement (G), les au moins deux saillies longitudinales en forme de nervures (33) s'étendant dans une direction commune perpendiculaire ou à peu près perpendiculaire au plan de coulissement (G) en s'éloignant d'un côté de la base (34) et/ou une autre saillie longitudinale en forme de nervure (336) s'étendant dans ou à peu près dans la première direction transversale (q1) en s'éloignant de la base (34).

6. Système télescopique (1) selon la revendication (5), **caractérisé en ce que** l'autre saillie (336) en forme de nervure de l'élément coulissant (3) présente une zone d'extrémité libre (333) qui est repliée à la manière d'un crochet parallèlement à la direction longitudinale (1), la zone d'extrémité libre (333) délimitant une autre rainure de réception (338) ouverte latéralement dans la première direction transversale (q1) pour une nervure de réception (231) d'un rail profilé (2; 2a; 2b) associé.

7. Système télescopique (1) selon la revendication 5 ou 6,
**caractérisé en ce que** l'autre saillie longitudinale (336) en forme de nervure s'engage dans une autre rainure longitudinale (221) d'un rail profilé (2; 2a; 2b) associé, dans la première direction transversale (q1) ou à peu près dans la première direction transversale.

8. Système télescopique (1) selon l'une des revendications 5 à 7, **caractérisé en ce que** l'autre saillie longitudinale (336) en forme de nervure est conçue pour agir de manière élastique par rapport à la deuxième direction transversale (q2).

9. Système télescopique (1) selon l'une des revendications 5 à 8, **caractérisé en ce que** l'élément coulissant (3) servant à guider le rail profilé (2; 2a; 2b) présente des surfaces latérales conçues comme des surfaces de guidage de glissement (5), dont certaines surfaces de guidage de glissement (5) conçues comme des premières surfaces de guidage de glissement (51) sont disposées perpendiculairement à la première direction transversale (q1) ou dont certaines surfaces de guidage de glissement (5) conçues comme des secondes surfaces de guidage de glissement (52) sont disposées perpendiculairement à la seconde direction transversale (q2) perpendiculairement à la première direction transversale (q1).

10. Système télescopique (1) selon la revendication 9, **caractérisé en ce que** les surfaces de guidage de glissement (5; 51; 52) présentent des biseaux d'entrée (35) des deux côtés pour faciliter le montage par rapport à la direction longitudinale (1).

11. Système télescopique (1) selon l'une des revendications 5 à 10, **caractérisé en ce que** les bases (34) des éléments de glissement (3) disposés entre les deux rails profilés (2; 2a; 2b) sont disposées dans un plan commun parallèle au plan de glissement (G).

12. Système télescopique (1) selon l'une des revendications 5 à 11, **caractérisé en ce que** les éléments coulissants (3) disposés entre les deux rails profilés (2 ; 2a; 2b) sont disposés et/ou orientés de manière symétrique l'un par rapport à l'autre par rapport à un premier plan de symétrie miroir (S1) central perpendiculaire à la première direction transversale (q1).

13. Système télescopique (1) selon l'une des revendications 1 à 12, **caractérisé en ce que** les éléments coulissants (3) sont de construction identique et/ou sont chacun réalisés d'une seule pièce.

14. Système télescopique (1) selon l'une des revendications 1 à 13, **caractérisé en ce que**, pour limiter la course (W) de deux rails profilés (2; 2a; 2b) guidés l'un contre l'autre et mobiles l'un par rapport à l'autre, il est prévu un dispositif de butée (3) avec deux butées d'extrémité (61) et un élément de butée (62) coopérant avec les butées d'extrémité (61), les deux butées d'extrémité (61) étant fixées dans une rainure de butée (63) prévue dans le profilé longitudinal (32) d'un des deux rails profilés (2; 2a; 2b) de manière espacée l'une de l'autre à un endroit déterminé sur l'étendue longitudinale de la rainure de butée (63) et l'élément de butée (62) est fixé en position et de manière à pouvoir glisser dans une autre rainure de butée (64) prévue dans le profilé longitudinal (22) de l'autre rail profilé (2; 2a; 2b), l'élément de butée (62), pour la butée sur les deux butées d'extrémité (61), étant disposé de manière à faire saillie de l'autre rainure de butée (64) entre les deux butées d'extrémité (61) dans la rainure de butée (63).

15. Système télescopique (1) selon la revendication 14, **caractérisé en ce que** les butées d'extrémité (61) sont formées chacune par un élément de serrage (4) et/ou **en ce que** l'élément de butée (62) est disposé en position fixe dans l'autre rainure de butée (64) qui lui est associée, au moyen d'un élément de serrage (4).
